# EUROPÄISCHE PATENTSCHRIFT

(11) **EP 0 446 966 B1**
(45) Veröffentlichungstag und Bekanntmachung des Hinweises auf die Patenterteilung: **27.07.1994**
(21) Anmeldenummer: 91108264.2
(22) Anmeldetag: 10.10.1985
(51) Int. Cl.: B62M 11/16

(54) **Mehrganggetriebenabe**
Multiplexed drive hub
Corps de moyeu de transmission à plusieurs rapports

(30) Priorität: 02.11.1984 DE 3440067
(43) Veröffentlichungstag der Anmeldung: 18.09.1991
(62) Teilanmeldung aus: 85112862.9
(73) Patentinhaber: Fichtel & Sachs AG, D-97419 Schweinfurt (DE)
(72) Erfinder: Steuer, Werner, W-8720 Schweinfurt (DE); Bergles, Eduard, A-8041 Graz (AT)
(74) Vertreter: Weickmann, Heinrich, Dipl.-Ing.

(56) Entgegenhaltungen:
- DE-A- 2 337 725
- FR-A- 439 639
- FR-A- 914 176
- US-A- 1 490 644

## Beschreibung

Die Erfindung betrifft in Übereinstimmung mit dem Oberbegriff des Anspruchs 1 eine Mehrganggetriebenabe mit mehr als 3 Gängen, insbesondere mit 5 Gängen, und -gewünschtenfalls- mit Rücktrittbremse für Fahrräder oder dergleichen, umfassend
eine Nabenachse, welche eine geometrische Achse besitzt,
einen Antreiber, welcher drehbar auf der Nabenachse gelagert ist, wobei dieser Antreiber dazu ausgebildet ist, um mit mindestens einem Kettenzahnkranz ausgerüstet zu werden,
eine Nabenhülse, welche drehbar auf der Nabenachse gelagert ist,
ein Planetengetriebesystem innerhalb der Nabenhülse, wobei dieses Planetengetriebesystem aufweist:
einen axial feststehenden Planetenradträger, welcher auf der Nabenachse drehbar gelagert ist,
mindestens ein axial feststehendes Planetenrad, welches drehbar auf dem Planetenradträger gelagert ist, wobei dieses Planetenrad mit einem großen Stufenplanetenrad und einem kleinen Stufenplanetenrad ausgeführt ist,
Sonnenräder, nämlich ein kleines Sonnenrad zum kämmenden Eingriff mit dem großen Stufenplanetenrad (8a) und ein großes Sonnenrad zum kämmenden Eingriff mit dem kleinen Stufenplanetenrad, wobei diese Sonnenräder selektiv gegen Drehung um die Nabenachse sperrbar sind,
ein Hohlrad, welches drehbar um die Nabenachse gelagert ist,
wobei das Hohlrad in kämmendem Eingriff mit einem der Stufenplanetenräder steht,
und ferner umfassend
ein axial verschiebbares Kupplungselement, insbesondere in Form einer Kupplungsbuchse, welches in ständigem drehfestern Eingriff mit dem Antreiber steht und durch axiale Verschiebung diesen selektiv zur Kupplung bringt mit entweder dem Planetenradträger oder dem Hohlrad, um gemeinsam mit dem jeweiligen Teil um die Nabenachse zu rotieren,
ein erstes Freilaufgesperre (Antriebssperrklinke - Innengesperre zwischen dem Hohlrad und der Nabenhülse,
ein zweites Freilaufgesperre (Antriebssperrklinke - Innengesperre) zwischen dem Planetenradträger und der Nabenhülse und
Gangsteuerungsmittel (Zugstange - Zugkette - Anschlußteil), welche durch eine Bohrung der Nabenachse in das Nabeninnere hereingeführt sind und welche dazu bestimmt und geeignet sind, um durch einen Schlitz der Nabenachse hindurch selektiv das eine oder andere der Sonnenräder gegen die Drehung um die Nabenachse zu sperren, um selektiv den Antreiber mit dem Planetenradträger und dem Hohlrad zu kuppeln und um das erste Freilaufgesperre zu inaktivieren.

Eine solche 5-Ganggetriebenabe ist aus der FR-A 914 176 bekannt.

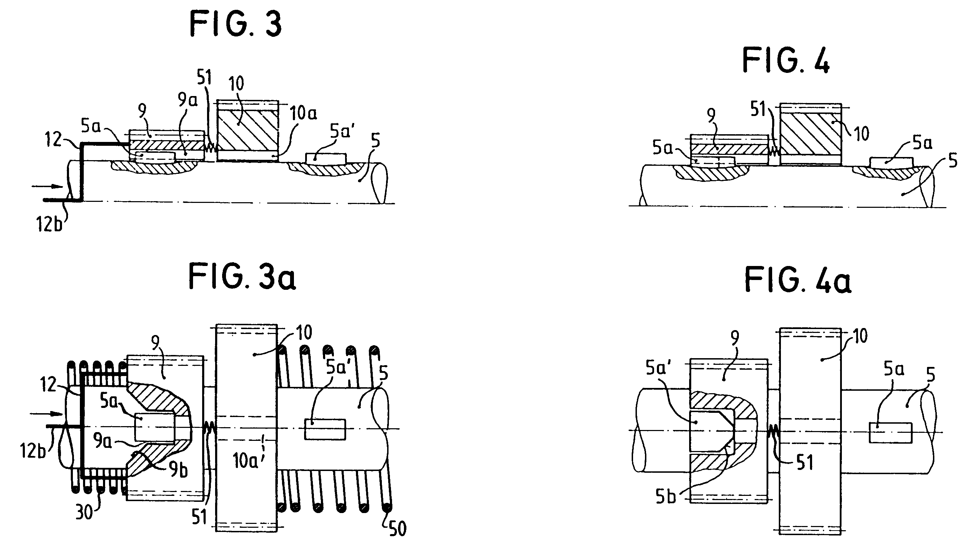

Bei dieser bekannten Ausführungsform sind nach einer ersten Variante gem. Fig. 4 zwei Gangsteuerungsmittel von den beiden einander gegenüberliegenden Enden der Nabenachse her eingeführt. Bei dieser ersten Variante sind auf der Nabenachse für jedes der Sonnenräder Feststellverzahnungen angebracht. Die beiden Sonnenräder sind durch eine an dem kleinen Sonnenrad angreifende erste Federung so vorgespannt, daß das große Sonnenrad in Eingriff mit der zugehörigen Feststellverzahnung steht und das kleine Sonnenrad außer Eingriff mit der zugehörigen Feststellverzahnung ist. Das eine Gangsteuerungsmittel greift an dem kleinen Sonnenrad entgegen der Wirkung der ersten Federung an, um das kleine Sonnenrad in Eingriff mit der zugehörigen Feststellverzahnung zu bringen. Wenn dies geschieht, folgt das große Sonnenrad unter der Wirkung einer zweiten Federung dem kleinen Sonnenrad und kommt außer Eingriff mit der zugehörigen Feststellverzahnung. Andererseits dient das zweite Gangsteuerungsmittel, welches von dem anderen Ende der Nabenachse her eingeführt ist, dazu, um selektiv das Kupplungselement mit dem Planetenradträger oder dem Hohlrad zu verbinden.

Nach einer zweiten Variante ist vorgesehen, von einem Ende der Nabenachse her zwei Gangsteuerungsmittel entweder konzentrisch ineinander oder nebeneinander einzuführen, wobei wiederum das eine Gangsteuerungsmittel zur selektiven Drehfestmachung jeweils eines Sonnenrads dient und das andere Gangsteuerungsmittel zur selektiven Verbindung des Kupplungselements mit dem Planetenradträger oder dem Hohlrad bestimmt ist.

Eine Rücktrittbremse ist nach der FR-A 914 176 nicht vorgesehen. Weiterhin fehlt bei den Ausführungsformen nach der FR-A 914 176 eine Sicherung dafür, daß beispielsweise auch bei ungenau justierten Gangsteuerungsmitteln gleichwohl eine sichere Drehmomentübertragung gewährleistet ist.

Aus der US-PS 14 90 644 ist eine 5-Ganggetriebenabe ohne Rücktrittbremse bekannt. Bei dieser bekannten Ausführungsform ist ein Planetengetriebe mit zwei Sonnenrädern, nämlich einem kleinen Sonnenrad und einem großen Sonnenrad vorgesehen.

Ein Planetenradträger ist zweiteilig ausgeführt mit zwei Planetenradträgerteilen. Der eine Planetenradträgerteil trägt ein großes Planetenrad, welches in Eingriff mit dem kleinen Sonnenrad steht. Der andere Planetenradträgerteil trägt ein kleines Planetenrad, welches in Eingriff mit dem großen Sonnenrad steht.

Den beiden Planetenrädern ist ein Hohlrad gemeinsam. Zwischen dem Hohlrad und der Nabenhülse läßt sich ein erstes Freilaufgesperre bilden. Zwischen dem einen Planetenradträgerteil und der Nabenhülse läßt sich ein zweites Freilaufgesperre bilden. Der gesamte Bausatz, bestehend aus den beiden Sonnenrädern, den beiden Planetenradträgerteilen, den beiden Planetenrädern und dem Hohlrad, läßt sich in fünf Bewegungsstufen längs der Nabenachse verschieben.

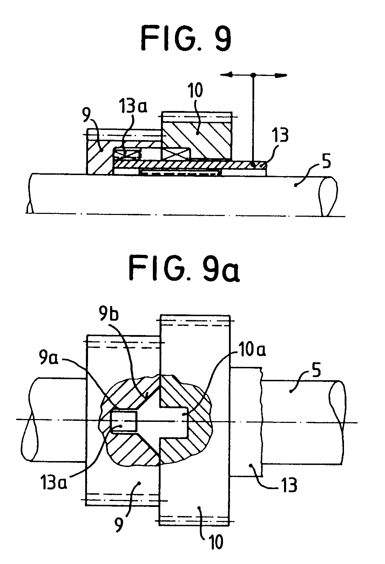

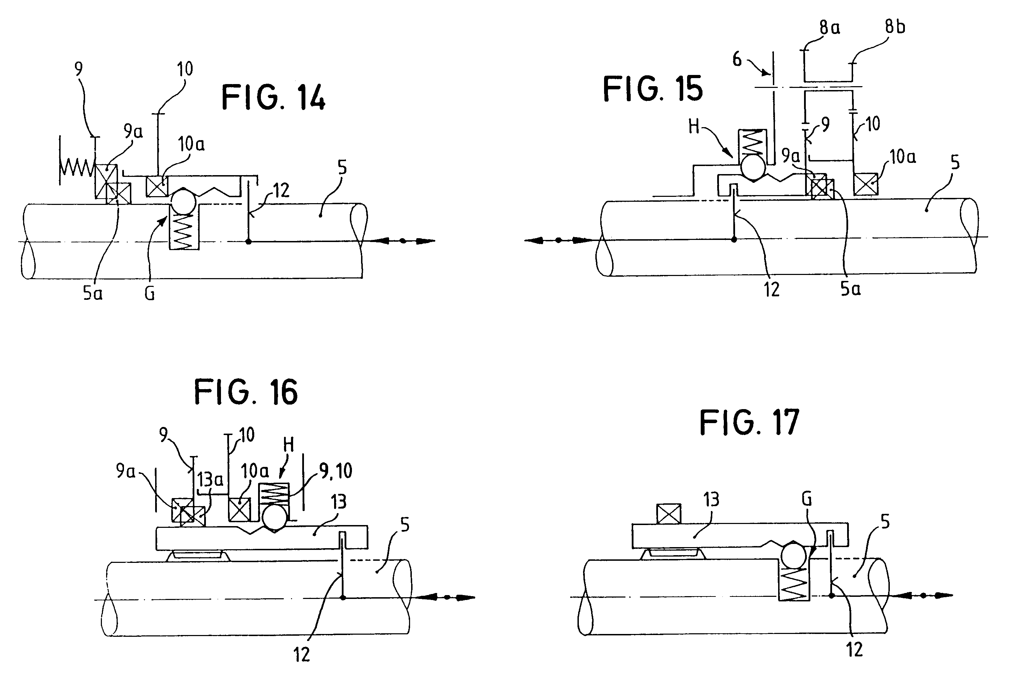

In einem fünften Schaltzustand, entsprechend dem großen Schnellgang (Fig. 14), ist das große Sonnenrad drehfest gegenüber der Nabenachse. Der Antreiber steht in drehmomentübertragender Verbindung mit dem anderen Planetenradträgerteil. Das Hohlrad wird durch das kleine Planetenrad angetrieben und die Drehbewegung des Hohlrads wird über das erste Freilaufgesperre auf die Nabenhülse übertragen. In einem vierten Schaltzustand, entsprechend dem zweiten oder kleineren Schnellgang (Fig. 9), treibt der Antreiber wiederum den anderen Planetenradträgerteil. Das große Sonnenrad ist frei drehbar. Das kleine Sonnenrad ist durch eine Sperrklinke an der Drehung gehindert. Das Hohlrad treibt wie im fünften Schaltzustand die Nabenhülse über das erste Freilaufgesperre.

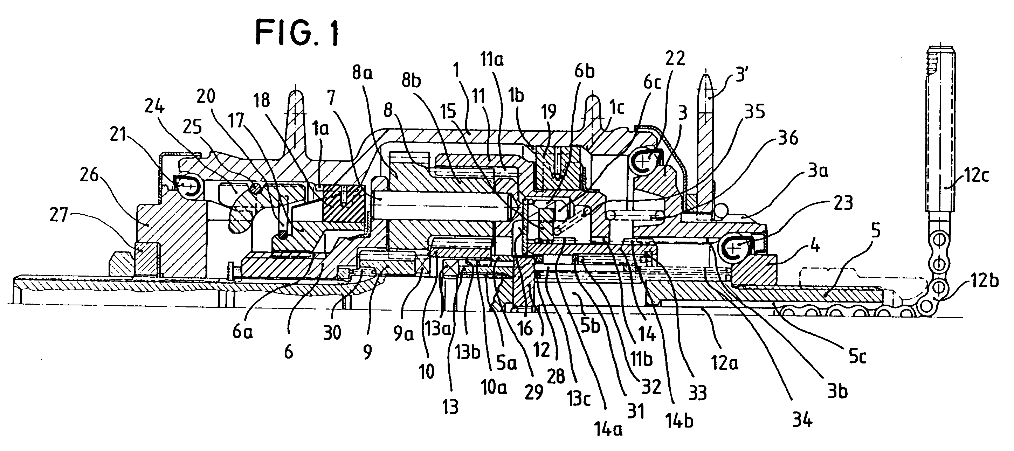

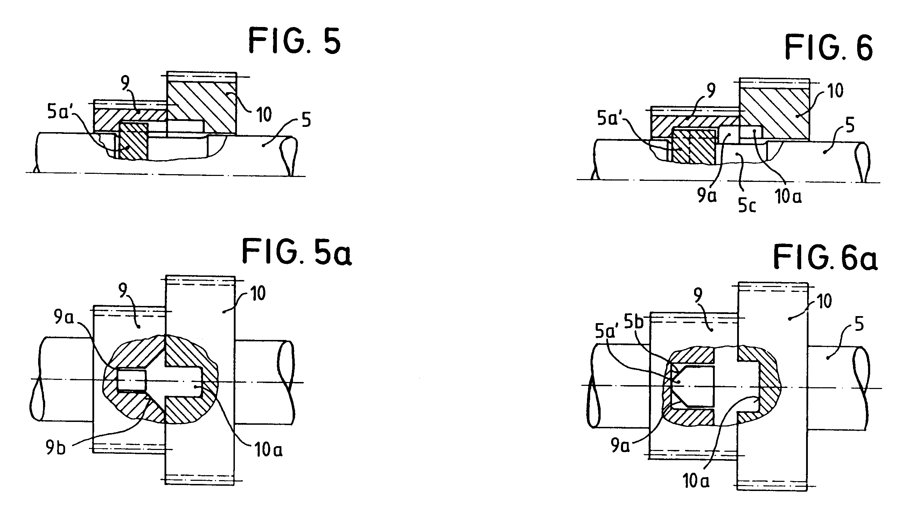

In einem dritten Schaltzustand, entsprechend dem direkten Gang (Fig. 1), sind beide Sonnenräder frei drehbar. Das Hohlrad wird durch den Antreiber angetrieben und überträgt seine Drehbewegung auf die Nabenhülse über das erste Freilaufgesperre. In einem zweiten Schaltzustand, entsprechend dem kleinen Berggang (Fig. 6), wird das Hohlrad durch den Antreiber angetrieben. Das kleine Sonnenrad stützt sich gegen Drehung an die Nabenachse ab, das große Sonnenrad ist frei drehbar. Der Abtrieb erfolgt von dem einen Planetenradträgerteil über das zweite Freilaufgesperre.

In einem ersten Schaltzustand, entsprechend dem großen Berggang (Fig. 3), ist der Antreiber in antriebsübertragender Verbindung mit dem Hohlrad. Das große Sonnenrad ist gegen Drehung gesperrt. Der Abtrieb erfolgt von dem einen Planetenradträgerteil über das zweite Freilaufgesperre zur Nabenhülse.

Der Erfindung liegt die Aufgabe zugrunde, insbesondere bei Vorhandensein einer Rücktrittbremse sicherzustellen, daß der jeweils einzustellende Drehmomentübertragungsweg zuverlässig existiert, beispielsweise auch dann, wenn die Gangsteuerungsmittel nicht vorschriftsmäßig justiert sind.

Zur Lösung dieser Aufgabe wird in Übereinstimmung mit dem Kennzeichen des Anspruchs 1 vorgeschlagen, daß jedes der Sonnenräder gegen Drehung um die Nabenachse durch mindestens eine Kupplungszahn-Kupplungs aus nehmungskombination sperbar ist mit einem auf der Nabenachse drehfest angeordneten Kupplungszahn und einer an dem jeweiligen Sonnenrad angeordneten Kupplungsausnehmung, daß die Sperrung und die Drehungsfreigabe des jeweiligen Sonnenrads durch axiale Relativbewegung des jeweiligen Kupplungszahnes und der jeweiligen Kupplungsausnehmung erfolgt, indem der jeweilige Kupplungszahn in die jeweilige Kupplungsausnehmung eintritt bzw. aus dieser austritt, daß sowohl der Kupplungszahn als auch die Kupplungsausnehmung der Kupplungszahn-Kupplungsausnehmungskombinationen eines jeden Sonnenrads jeweils ein Paar im wesentlichen achsparalleler Kupplungsflanken umfaßt, daß einer von den Teilen: Kupplungszahn, Kupplungsausnehmung einer Kupplungszahn-Kupplungsausnehmungskombination eines Sonnenrads (9) mindestens eine Einweiseflanke axial angrenzend an eine zugehörige Kupplungsflanke umfaßt derart, daß durch Relativdrehung des Kupplungszahns und der Kupplungsausnehmung der Kupplungszahn-Kupplungsausnehmungskombination des einen Sonnenrads bei peripherem Gegenüberstehen der Einweiseflanke des einen der Teile: Kupplungszahn und Kupplungsausnehmung gegenüber dem jeweils anderen dieser Teile eine axiale Relativverschiebung von Kupplungszahn und Kupplungsausnehmung der Kupplungszahn-Kupplungsausnehmungskombination des einen Sonnenrads in Richtung auf Eingriffslösung dieses Kupplungszahns und dieser Kupplungsausnehmung stattfindet und daß diese axiale Relativverschiebung eine axiale Folgerelativverschiebung des Kupplungszahns und der Kupplungsausnehmung der Kupplungszahn-Kupplungsausnehmungskombination des anderen Sonnenrads in Richtung auf Eingriffsherstellung der Kupplungsflanken des Kupplungszahns und der Kupplungsausnehmung der Kupplungszahn-Kupplungsausnehmungskombination des anderen Sonnenrads veranlaßt.

Dieses Sicherungsprinzip kann auf verschiedene Weise weitergebildet werden. So ist es entsprechend dem kennzeichnenden Teil des Anspruchs 2 möglich,
daß einer von den Teilen: Kupplungszahn, Kupplungsausnehmung einer Kupplungszahn-Kupplungsausnehmungskombination eines Sonnenrads eine Einweiseflanke axial angrenzend an das jeweils zugehörige Paar von Kupplungsflanken umfaßt, und daß die einzelnen Einweiseflanken des genannten Paars von Einweiseflanken gegenüber einer zur Achse parallelen und durch den peripheren Mittelpunkt des jeweils zugehörigen Teils: Kupplungszahn, Kupplungsausnehmung gelegten Bezugslinie in entgegengesetzter Richtung geneigt sind.

Dabei kann entsprechend dem kennzeichnenden Teil des Anspruchs 3 vorgesehen sein,
daß der axialen Relativverschiebung des Kupplungszahns und der Kupplungsausnehmung der besagten Kupplungszahn-Kupplungsausnehmungskombination des einen Sonnenrads eine erste Federung (Feder) entgegenwirkt, und daß die axiale Folgerelativverschiebung des Kupplungszahns und der Kupplungsausnehmung der Kupplungszahn-Kupplungsausnehmungskombination des anderen Sonnenrads durch eine zweite Federung (Feder) bewirkt wird.

Weiter kann entsprechend dem kennzeichnenden Teil des Anspruchs 4 vorgesehen sein,
daß die Kupplungszahn-Kupplungsausnehmungskombination eines ersten der Sonnenräder und die Kupplungszahn-Kupplungsausnehmungskombination eines zweiten der Sonnenräder einen gemeinsamen Kupplungszahn für jede der beiden Kombinationen und je eine Ausnehmung in jedem der beiden Sonnenräder umfaßt.

Es ist auch entsprechend dem kennzeichnenden Teil des Anspruchs 5 denkbar, daß die Kupplungszahn-Kupplungsausnehmungskombination eines ersten Sonnenrads einen ersten Kupplungszahn und eine erste Kupplungsausnehmung für das erste Sonnenrad umfaßt und daß die Kupplungszahn-Kupplungsausnehmungskombination des zweiten Sonnenrads einen zweiten Kupplungszahn und eine zweite Kupplungsausnehmung für das zweite Sonnenrad umfaßt.

Hierbei ist es entsprechend dem kennzeichnenden Teil des Anspruchs 6 möglich,
daß der gemeinsame Kupplungszahn axial fest bezüglich der Nabenachse angeordnet ist, und daß die Sonnenräder axial beweglich gegenüber der Nabenachse sind , oder
daß entsprechend dem kennzeichnenden Teil des Anspruchs 7 der gemeinsame Kupplungszahn axial beweglich gegenüber der Nabenachse und daß die Sonnenräder axial fest gegenüber der Nabenachse sind.

Entsprechend den Ansprüchen 8 und 9 können die Einweiseflanken Teile der jeweiligen Kupplungsausnehmung oder Teile des jeweiligen Kupplungszahns sein.

Es ist entsprechend dem kennzeichnenden Teil des Anspruchs 10 möglich,
daß der Kupplungszahn mindestens einer der Kupplungszahn-Kupplungsausnehmungskombinationen einstückig mit der Nabenachse hergestellt ist.

Es ist aber auch entsprechend dem kennzeichnenden Teil des Anspruchs 11 möglich,
daß der Kupplungszahn mindestens einer der Kupplungszahn-Kupplungsausnehmungskombinationen ein Teil mindestens eines Schubklotzes ist.

Bei axial beweglicher Anordnung eines gemeinsamen Kupplungszahns ist es entsprechend dem Anspruch 12 möglich, daß der Kupplungszahn mindestens einer der kupplungszahn-Kupplungsausnehmungskombinationen auf einer Schiebehülse angeordnet ist, welche axial beweglich ist und unverdrehbar auf der Nabenachse angebracht ist.

Wenn für ein erstes Sonnenrad ein erster Kupplungszahn und eine erste Kupplungsausnehmung und für ein zweites Sonnenrad ein zweiter Kupplungszahn und eine zweite Kupplungsausnehmung vorhanden sind, so ist es entsprechend dem kennzeichnenden Teil des Anspruchs 13 möglich, daß eine Trennfederung (Druckfeder zwischen den beiden Sonnenrädern vorgesehen ist, daß die beiden Sonnenräder gegenüber der Nabenachse axial beweglich sind, und daß die Kupplungszähne der Kupplungszahn-Kupplungsausnehmungskombination gegenüber der Nabenachse axial fest sind.

Die Erfindung ist unabhängig davon anwendbar, ob die Gangsteurung von einem Ende oder von beiden Enden der Nabenachse her erfolgt und insbesondere auch in dem Fall, daß entsprechend dem kennzeichnenden Teil des Anspruchs 14 die Gangsteuerungsmittel zwei Gangsteuerungselemente umfassen, welche von beiden Enden der Nabenachse her in entsprechende Bohrungen der Nabenachse eingeführt sind, daß ein erstes dieser Gangsteuerungselemente dazu bestimmt und geeignet ist, um den Antreiber wahlweise mit dem Planetenradträger und dem Hohlrad zu kuppeln und das erste Freilaufgesperre zu inaktivieren, und daß das zweite Gangsteuerungselement dazubestimmt und geeignet ist, um nach Wahl das eine oder das andere der Sonnenräder gegen Drehung um die Nabenachse zu sperren.

Eine besonders platzsparende und formschöne Mehrganggetriebenabe erhält man entsprechend dem kennzeichnenden Teil des Anspruchs 15 dadurch, daß die Nabenhülse einen ersten Axialabschnitt von größerem Durchmesser und einen zweiten Axialabschnitt von kleinerem Durchmesser besitzt, daß der erste Axialabschnitt das Planetengetriebesystem aufnimmt und daß der zweite Axialabschnitt die Rücktrittbremse aufnimmt.

Wenn eine Rücktrittbremse vorgesehen ist, so ist es entsprechend dem kennzeichnenden Teil des Anspruchs 16 möglich, daß die Rücktrittbremse einen Bremskonus und einen spreizbaren Bremsmantel umfaßt, daß der spreizbare Bremsmantel drehfest an der Nabenachse festgelegt ist, daß der Bremskonus auf dem Planetenradträger durch eine Gewindeanordnung angebracht und gegen Drehung durch eine Friktionsfeder gesichert ist, wobei eine Rückwärtsverdrehung des Planetenradträgers unter Vermittlung der Gewindeanordnung eine Axialbewegung des Bremskonus bewirkt und wobei diese Axialbewegung des Bremskonus eine Spreizung des Bremsmantels zum bremsenden Eingriff mit der Nabenhülse bewirkt.

Die Erfindung läßt sich entsprechend Anspruch 17, insbesondere bei einer 5-Ganggetriebenabe und hier wieder insbesondere bei einer solchen mit Rücktrittbremse anwenden,
wobei in einem 5. Schaltzustand das kleine Sonnenrad frei zur Drehung um die Nabenachse ist, das große Sonnenrad gegen Drehung um die Nabenachse gesperrt ist, der Antreiber in drehmomentübertragendem Eingriff mit dem Planetenradträger steht und das erste Freilaufgesperre aktiv ist,
wobei in einem 4. Schaltzustand das kleine Sonnenrad gegen Drehung um die Nabenachse gesperrt ist, das große Sonnenrad frei um die Nabenachse drehbar ist, der Antreiber noch in drehmomentübertragendem Eingriff mit dem Planetenradträger steht und das erste Freilaufgesperre noch aktiv ist,
wobei in einem 3. Schaltzustand das kleine Sonnenrad gegen Drehung um die Nabenachse gesperrt ist, das große Sonnenrad um die Nabenachse frei drehbar ist, der Antreiber in drehmomentübertragendem Eingriff mit dem Hohlrad ist und das erste Freilaufgesperre noch aktiv ist,
wobei in einem 2. Schaltzustand das kleine Sonnenrad gegen Drehung um die Nabenachse gesperrt ist, das große Sonnenrad frei um die Nabenachse drehbar ist, der Antreiber in drehmomentübertragender Verbindung mit dem Hohlrad steht und das erste Freilaufgesperre inaktiviert ist, und
wobei in einem 1. Schaltzustand das kleine Sonnenrad frei drehbar um die Nabenachse ist, das große Sonnenrad gegen Drehung um die Nabenachse gesperrt ist, der Antreiber in drehmomentübertragendem Eingriff mit dem Hohlrad steht und das erste Freilaufgesperre inaktiviert ist,

Es ist entsprechend dem kennzeichnenden Teil des Anspruchs 18 denkbar,
daß die beiden Sonnenräder durch eine Feder gegen einen mit einem zugehörigen Gangsteuerungsorgan verbundenen Schubklotz in eine Stellung vorgespannt sind, in welcher eines der Sonnenräder in Eingriff mit einem nabenachsenfesten Kupplungselement steht, und daß bei Verschieben dieses Schubklotzes die Feder das eine Sonnenrad außer Eingriff und das andere Sonnenrad in Eingriff mit dem nabenachsenfesten Kupplungselement verschiebt.

Entsprechend dem Anspruch 19 können dabei zwischen den beiden Sonnenrädern Anschlagmittel vorgesehen sein.

Bevorzugt wird entsprechend dem Anspruch 20 eine Bauweise derart gewählt,
daß das kleine Sonnenrad antreiberfern und das große Sonnenrad antreibernahe angeordnet sind, daß die beiden Sonnenräder durch die Feder in Richtung auf Eingriff des kleinen Sonnenrads mit dem nabenachsenfesten Kupplungselement vorgespannt sind,
daß ein den Sonnenrädern zugeordnetes Gangsteuerungsorgan von dem antreiberfernen Ende der Nabenachse her in diese eingeführt ist, und daß durch Ziehen dieses Gangsteuerungsorgans die Sonnenräder gemeinsam gegen die Wirkung der Feder in Stellungen verschiebbar sind, in welchen das große Sonnenrad in Eingriff mit dem achsfesten Kupplungselement steht und das kleine Sonnenrad außer Eingriff mit diesem Kupplungselement steht.

Entsprechend dem kennzeichnenden Teil
des Anspruchs 21 ist es möglich,
daß ein dem antreiberseitigen Kupplungselement (Kupplungsbuchse zugeordnetes Gangsteuerungsorgan von dem antreiberseitigen Nabenachsenende her in die Nabenachse eingeführt ist, daß das Kupplungselement (Kupplungsbuchse) durch eine Federung (Druckfeder) in Richtung auf Eingriff mit dem Planetenradträger vorgespannt ist, daß der Antreiber durch Ziehen des zugehörigen Gangsteuerungsorgans aus dem Eingriff mit dem Planetenradträger trennbar und zum Eingriff mit dem Hohlrad (11) bringbar ist, und daß durch weiteres Ziehen dieses Gangsteuerungsorgans das 1. Freilaufgesperre inaktivierbar ist.

Nach einer anderen Betrachtungsweise geht die Erfindung entsprechend Anspruch 22 aus von einer Sonnenradfeststelleinrichtung bei einer Mehrganggetriebenabe mit mehr als 3 Gängen und - gewünschtenfalls - mit einer Rücktrittbremse für Fahrräder oder dergleichen, insbesondere bei einer 5-Ganggetriebenabe, bei welcher Mehrganggetriebenabe ein Planetengetriebesystem innerhalb einer Nabenhülse aufweist:
einen axial feststehenden Planetenradträger, welcher auf einer Nabenachse drehbar gelagert ist,
mindestens ein axial feststehendes Planetenrad, welches drehbar auf dem Planetenradträger gelagert ist, wobei dieses Planetenrad mit einem großen Stufenplanetenrad und einem kleinen Stufenplanetenrad ausgeführt ist,
Sonnenräder, nämlich ein kleines Sonnenrad zum kämmenden Eingriff mit dem großen Stufenplanetenrad und ein großes Sonnenrad zum kämmenden Eingriff mit dem kleinen Stufenplanetenrad,
Gangsteuerungsmittel, welche durch eine Bohrung der Nabenachse in das Nabeninnere hereingeführt sind und welche dazu bestimmt und geeignet sind, um durch einen Schlitz der Nabenachse hindurch selektiv die Sperrung des einen oder anderen der Sonnenräder gegen Drehung um die Nabenachse zu steuern,
und ein Hohlrad, welches drehbar um die Nabenachse gelagert ist und in kämmendem Eingriff mit dem Planetenrad steht.

Hierbei ist zur Lösung der weiter oben formulierten Aufgabe vorgesehen, daß jedes der Sonnenräder gegen Drehung um die Nabenachse durch mindestens eine Kupplungszahn-Kupplungsausnehmungskombination sperrbar ist mit einem auf der Nabenachse drehfest angeordneten Kupplungszahn und einer an dem jeweiligen Sonnenrad angeordneten Kupplungsausnehmung, daß die Sperrung und die Drehungsfreigabe des jeweiligen Sonnenrads durch axiale Relativbewegung des jeweiligen Kupplungszahnes und der jeweiligen Kupplungsausnehmung erfolgt, indem der jeweilige Kupplungszahn in die jeweilige Kupplungsausnehmung eintritt bzw. aus dieser austritt, daß sowohl der Kupplungszah als auch die Kupplungsausnehmung der Kupplungszahn-Kupplungsausnehmungskombinationen eines jeden Sonnenrads jeweils ein Paar im wesentlichen achsparalleler Kupplungsflanken umfaßt, daß einer von den Teilen: Kupplungszahn, Kupplungsausnehmung einer Kupplungszahn-Kupplungsausnehmungskombination eines Sonnenrads mindestens eine Einweiseflanke axial angrenzend an eine zugehörige Kupplungsflanke umfaßt derart, daß durch Relativdrehung des Kupplungszahns und der Kupplungsausnehmung der Kupplungszahn-Kupplungsausnehmungskombination des einen Sonnenrads bei peripherem Gegenüberstehen der Einweiseflanke des einen der Teile: Kupplungszahn und Kupplungsausnehmung gegenüber dem jeweils anderen dieser Teile eine axiale Relativverschiebung von Kupplungszahn und Kupplungsausnehmung der Kupplungszahn-Kupplungsausnehmungskombination des einen Sonnenrads in Richtung auf Eingriffslösung dieses Kupplungszahns und dieser Kupplungsausnehmung stattfindet und daß diese axiale Relativverschiebung eine axiale Folgerelativverschiebung des Kupplungszahns und der Kupplungsausnehmung der Kupplungszahn-Kupplungsausnehmungskombination des anderen Sonnenrads in Richtung auf Eingriffsherstellung der Kupplungsflanken des Kupplungszahns und der Kupplungsausnehmung der Kupplungszahn-Kupplungsausnehmungskombination des anderen Sonnenrads veranlaßt.

Durch diese Maßnahme wird neben der Sicherstellung einer ständigen Feststellbereitschaft der Sonnenräder und damit Drehmomentübertragungsbereitschaft für Antrieb und Bremsen auch eine Voraussetzung dafür geschaffen, daß die beiden Sonnenräder nicht gleichzeitig festgestellt werden.

Die beiliegenden Figuren erläutern die Erfindung an Hand von Ausführungsbeispielen.

Im einzelnen zeigt
Fig. 1 eine die erfindungs wesentlichen Einweiseflanken nicht zeigende, Nabenachsseite schaltbare Mehrgangnabe mit fünf Gängen und mit einer Rücktrittbremseinrichtung im halben Längsschnitt zur Erläuterung der Grundlagen der Erfindung,
Fig. 2a und 2a′ bzw. 2b und 2b′ jeweils eine Anordnung, bei welcher Sonnenräder axial verschiebbar auf der Nabenachse gelagert sind und diese Achse mit einer Kupplungsverzahnung ausgerüstet ist,
Fig. 3, 3a bzw. 4, 4a jeweils eine Anordnung von axial verschiebbaren, auf der Nabenachse gelagerten Sonnenrädern, wobei die Nabenachse zwei Kupplungsverzahnungen aufweist,
Fig. 5, 5a bzw. 6, 6a jeweils eine Anordnung von axial festen Sonnenrädern auf der Nabenachse, wobei ein Kupplungselement in der Nabenachse axial verschiebbar ist,
Fig. 7, 7a bzw. 8, 8a jeweils eine Anordnung von axial festgelegten Sonnenrädern auf der Nabenachse, es sind zwei verschiebbare Kupplungselemente in der Nabenachse vorgesehen,
Fig. 9 und 9a eine Anordnung axial festgelegter Sonnenräder, wobei auf der Nabenachse eine mit Kupplungselementen versehene Schiebehülse vorgesehen ist,
Fig. 10 bzw. 11 jeweils eine Anordnung von axial festgelegten Sonnenrädern, die mittels einer auf der Nabenachse drehfesten Schiebehülse wechselweise kuppelbar sind,
Fig. 12 bzw. 13 Beispiele für Umschaltsysteme für die Sonnenräder, wobei Leerlaufschaltstellungen vermieden sind,
Fig. 14 bzw. 15 jeweils eine Möglichkeit dafür, eines der mit der Nabenachse drehfest zu kuppelnden Sonnenräder axial zu verrasten,
Fig. 16, 17 bzw. 18 Schaltsysteme, bei welchen die Sonnenräder für sich axial festgelegt sind und jeweils über eine mit der Nabenachse drehfeste, jedoch axial verschiebbare zur Kupplung der Sonnenräder dienende Schiebehülse axial verrastet werden können,
Fig. 19 bzw. 20 Varianten zu den Ausführungsformen gemäß den Figuren 16 bis 18, bei welchen nunmehr zum Umschalten der auf der Nabenachse axial verschiebbar gelagerten Sonnenräder eine Hilfshülse verwendet ist, welche ihrerseits zur Nabenachse oder zum Planetenträger verrastbar ist,
Fig. 21 eine Anordnung, bei der bei axial verschiebbaren Sonnenrädern der Schubklotz in der Nabenachse selbst zur Vorgabe der funktionsrichtigen Schaltwege einrastet,
Fig. 22 bzw. 23 Jeweils ein Schaltungssystem, das bei axial verschiebbaren Sonnenrädern in nur eine Richtung geschaltet werden muß,
Fig. 24 einen Aufbau für eine Schaltbetätigung in nur eine Richtung bei axial festgelegten Sonnenrädern,
Fig. 25 bzw. 26 ein Aufbau für ein Schaltsystem für axial verschiebbare Sonnenräder, wobei in unterschiedlicher Weise eine Bewegungsumkehr einer speziellen Steuerhülse erreicht wird,
Fig. 27 ein Ausführungsbeispiel einer 5-Gang-Nabe mit zwei Schaltbetätigungselementen,
Fig. 28 ein Ausführungsbeispiel einer 5-Gang-Nabe mit nur einem Schaltbetätigungselement,
Fig. 29 eine konstruktive Abwandlung zu Fig. 1 in schematischer Teildarstellung,
Fig. 30 eine Ansicht zu Fig. 29 in Pfeilrichtung XXX derr Fig. 29

Bei der in Figur 1 beispielsweise gezeigten Mehrgangnabe mit mehr als drei Gängen und einer Rücktrittbremseinrichtung ist mit 1 die Nabenhülse bezeichnet, welche über Kugelläufe 21 und 22 auf einem Hebelkonus 26 und einem Antreiber 3 drehbar gelagert ist. Der in Mitnehmernuten 3a einen Kettenzahnkranz 3′ tragende Antreiber 3 ist seinerseits über einen Kugellauf 23 drehbar auf einem mit der Nabenachse 5 verschraubten Festkonus 4 gelagert.

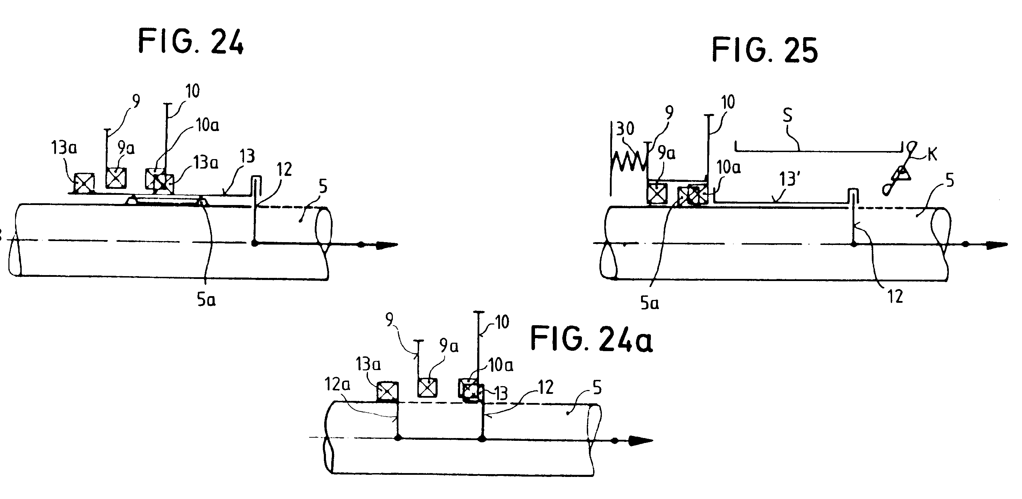

Im Inneren der Nabenhülse 1 ist ein Planetenradträger 6 auf der Nabenachse 5 drehbar, jedoch axial festliegend, gelagert. Dieser Planetenradträger 6 weist auf Bolzen 7 gelagerte Planetenräder 8 auf, die als Stufenplanetenräder 8a und 8b ausgebildet sind, welche sowohl mit einem konzentrischen Hohlrad 11 als auch mit auf der Nabenachse 5 angeordneten Sonnenrädern 9 bzw. 10 kämmen. Fig. 24a eine Variante zum Aufbau gem. Fig.24,

Die Sonnenräder 9 bzw. 10 können mittels eines Schubklotzes 12, der in einem Schlitz 5b der Nabenachse 5 gegen die Spannung einer Druckfeder 28 gleitet und von einer Zugstange 12a über eine Zugkette 12b mit Anschlußteil 12c von außen betätigt werden kann, gesteuert werden. Dabei wirkt auf das axial linke Sonnenrad 9 ständig eine coaxiale Druckfeder 30, deren Spannung durch Anliegen des Sonnenrades 9 am Sonnenrad 10 auch an letzteres weitergeleitet wird. - Die Betätigungseinrichtung für die Zugstange 12a mit Kette 12b und Anschlußteil 12c zur Steuerung des Schubklotzes 12 ist hier nicht dargestellt. - Die in ihrer Zähnezahl unterschiedlichen Sonnenräder 9 bzw. 10 sind wechselweise drehfest kuppelbar, wobei das Sonnenrad 9 mit axialen Kupplungsklauen 9a durch axiales Verschieben mit entsprechenden Klauen 13a einer Schiebehülse 13 gekuppelt werden kann, welche ihrerseits auf der Nabenachse 5 drehfest mittels Achsklauen 5a angeordnet, jedoch axial verschiebbar ist. In der in Figur 1 dargestellten Gangschaltstellung der Mehrgangnabe ist das in der Zähnezahl größere Sonnenrad 10 mittels radialer Kupplungselemente 10a mit der das Sonnenrad 10 coaxial aufnehmenden Schiebehülse 13 drehfest, jedoch für sich axial verschiebbar verbunden. Das Sonnenrad 10 kämmt dabei mit einem in der Zähnezahl kleineren Stufenplanetenrad 8b, während das auf der Nabenachse 5 lose drehbar befindliche Sonnenrad 9 mit dem in der Zähnezahl größeren Planetenstufenrad 8a kämmt. Auf beide Sonnenräder 9 und 10 wirkt von axial links die Druckfeder 30.

Auf der Nabenachse 5 ist coaxial zur Schiebehülse 13 eine Kupplungsbuchse 14 drehbar und gegen Federspannung axial verschiebbar angeordnet, wie noch zu beschreiben sein wird. An ihrem Außenumfang ist die Kupplungsbuchse 14 mit axial getrennten Verzahnungen 14a und 14b versehen, wobei die axial linksseitige Verzahnung 14a zusätzlich zur drehfesten Aufnahme einer seitlich angeordneten Mitnehmerscheibe 15 eingerichtet ist. Die axial rechte Verzahnung 14b der Kupplungsbuchse 14 ist ständig im Eingriff mit der axial lang ausgebildeten Innenverzahnung 3b des Antreibers 3.

Durch axiales Verschieben der Kupplungsbuchse 14 ist entweder die Mitnehmerscheibe 15 mit axialen Klauen 6b am Planetenradträger 6 oder die Außenverzahnung 14a mit einer entsprechenden Innenverzahnung 11b am Hohlrad 11 kuppelbar, wie noch näher zu beschreiben sein wird. Axial linksseitig zur Kupplungsbuchse 14 ist auf den Klauen 6b des Planetenradträgers 6 festliegend eine Scheibe 16 angeordnet, deren Funktion später noch erwähnt werden wird.

Auf dem axial äußerst linksseitigen Schaftteil des Planetenradträgers 6 ist auf einem Stellgewinde 6a axial verschiebbar ein Bremskonus 17 angeordnet, welcher zugleich als Träger für einen Satz Antriebssperrklinken 18 ausgebildet ist, welch letzterer unter Spannung einer Ringfeder stehend, ständig in ein Innengesperre 1a der Nabenhülse 1 eingreifen.

Das vorerwähnte Hohlrad 11 trägt auf dem mit der Innenverzahnung 11b versehenen Ansatzteil einen weiteren Satz federgespannter Antriebssperrklinken 19, welche je nach Lage des axial verschiebbar angeordneten Hohlrades 11 in ein Innengesperre 1b der Nabenhülse 1 in Eingriff treten können wie es beispielsweise in Figur 1 gezeigt wird, oder auch mittels einer Konusfläche 1c in der Nabenhülse 1 außer Eingriff gebracht werden können.

Der vorerwähnte Bremskonus 17 wird seinerseits unter Einwirkung einer Friktionsfeder 20 stehend, in noch zu beschreibender Weise bei Rückwärtsdrehen des Antreibers 3 auf dem Stellgewinde des Planetenradträgerschaftes nach axial links bewegt und spreizt dadurch einen Bremsmantel 24/25 auf, der seinerseits an einem mit Bremshebel 27 versehenen Hebelkonus 2 drehfest gehalten wird. Durch die Aufspreizung des Bremsmantels 24 in der Nabenhülse 1 wird diese zuverlässig gebremst.

Der vorerwähnte Schubklotz 12 steht, wie Figur 1 deutlich erkennen läßt, unter Spannung einer coaxialen Druckfeder 28, welche sich am Festkonus 4 auf der Nabenachse 5 abstützt und kann innerhalb des Schlitzes 5b in der Nabenachse 5 mittels der Zugstange 12a mit angeschlossener Zugkette 12b und Ansatzteil 12c axial nach rechts verschoben werden, zur Erzielung von anderen Gangschaltstufen, wie noch zu beschreiben sein wird. Der mit dem Ansatzteil 12c mittels Schaltzug verbundene Gangschalter ist hier nicht gezeigt.

In Figur 1 ist die beispielsweise gezeigte Mehrgangnabe in der Schaltstellung 5. Gang (großer Schnellgang) dargestellt. Der durch die Feder 28 belastete Schubklotz 12 befindet sich in der axial linken Stellung Innerhalb des Nabenachsschlitzes 5b. Die Schiebehülse 13 befindet sich unter Wirkung einer coaxialen Druckfeder 34 stehend, in der axial linken Endstellung, welche durch die zur drehfesten Halterung der Schiebehülse 13 dienenden Achsklauen 5a bestimmt wird. Die Schiebehülse 13 wird umgeben von einer Zwischenhülse 29, welche vom Schubklotz 12 ohne Spiel durchdrungen wird, wie Figur 1 deutlich erkennen Iäßt. Diese Zwischenhülse 29 bildet den axialen Anschlag nach rechts für das Sonnenrad 10, welches linksseitig vom unter Wirkung der Druckfeder 30 stehenden Sonnenrad 9 beaufschlagt wird. In der Gangschaltstellung gemäß Figur 1 ist das Sonnenrad 10 mittels seiner radialen Kupplungselemente 10a mit der Schiebehülse 13 über radial nach außen gerichtete Kupplungselemente 13b drehfest verbunden. Damit ist das Sonnenrad 10 mittelbar drehfest auf der Nabenachse 5, während das Sonnenrad 9 auf der Nabenachse 5 in dieser Gangschaltstellung frei drehbar ist, weil infolge der Lage axial äußerst links keine Kupplungsverbindung mit den axialen Elementen 9a des Sonnenrades 9 mit der entsprechenden Kupplungsverzahnung 13a der Schiebehülse 13 besteht.

Wie in Figur 1 erkennbar, steht die Kupplungsbuchse 14 mit ihrer Verzahnung 14b im Eingriff im Antreiber 3/3b, während die Verzahnung 14a über die auf ihr drehfest angebrachte Mitnehmerscheibe 15 mit den Klauen 6b des Planetenradträgers 6 in Wirkverbindung steht. Der Planetenradträger 6 treibt über seine Lagerbolzen 7 die Planetenräder 8 an, wovon das Stufenrad 8b mit dem in vorbeschriebener Weise drehfesten Sonnenrad 10 einerseits und andererseits mit der Hohlradverzahnung 11a kämmt. Das Hohlrad 11 steht über den Antriebsklinkensatz 19 mit dem Innengesperre 1b in der Nabenhülse 1 in Verbindung.

Der Drehmomentenfluß hat im gezeigten 5. Gang folgenden Verlauf:

Kettenrad auf Antreiber 3 mit Innenverzahnung 3b - Außenverzahnung 14b auf Kupplungshülse 14 zur Außenverzahnung 14a mit Mitnehmerscheibe 15 - Klauen 6b am Planetenradträger 6 - Planetenradlagerbolzen 7 mit Planetenrad 8 - Stufenrad 8b auf dem drehfesten Sonnenrad 10 abrollend - Innenverzahnung 11a im Hohlrad 11 - Antriebssperrklinken 19 - Innengesperre 1b in der Nabenhülse 1. Die Antriebssperrklinken 18 auf dem mit dem Planetenradträger 6 langsamer umlaufenden Bremskonus 17 werden von dem Innengesperre 1a der Nabenhülse 1 überholt.

Zur Schaltstellung 4. Gang (kleiner Schnellgang) wird der Schubklotz 12 soweit nach axial rechts gezogen, daß das an der Zwischenhülse 29 unmittelbar anliegende Sonnenrad 10 unter Einfluß des unter Wirkung der Druckfeder 30 stehenden Sonnenrades 9 axial nach rechts verschoben wird bis zum Eingriff der Kupplungsklauen 9a in die Klauen 13a der Schiebehülse 13, während die Kupplungselemente 10a des Sonnenrades 10 nunmehr außer Eingriff mit der Schiebehülse 13/13b kommen. Die übrigen Elemente des Nabengetriebes bleiben in der bei der Schaltstellung 5. Gang geschilderten Lage. Der Drehmomentenfluß ist im 4. Gang nunmehr folgender:

Kettenzahnkranz auf Antreiber 3 mit Innenverzahnung 3b - Außenverzahnung 14b auf Kupplungsbuchse 14 zur linken Außenverzahnung 14a mit Mitnehmerscheibe 15 - Klauen 6b am Planetenradträger 6 - Lagerbolzen 7 mit Planetenrädern 8b/8a - Planetenstufenrad 8a am Sonnenrad 9 und in Hohlrad 11/11a abrollend - Antriebssperrklinken 19 am Hohlrad 11 - Nabenhülse 1 mit Innengesperre 1b.

Zur Schaltstellung Normalgang (3.Gang) wird der Schubklotz 12 noch weiter nach axial rechts gezogen, so daß die Kupplungsbuchse 14 nunmehr infolge Anliegens der Zwischenhülse 29 an der in der Kupplungsbuchse 14 konzentrischen Druckfeder 32 gegen die an der Mitnehmerscheibe 15 anliegende Druckfeder 35 nach axial rechts verschoben wird und mit der Außenverzahnung 14a in Eingriff mit der Innenverzahnung 11b des Hohlrades 11 kommt, während die zuvor wirksame Mitnehmerscheibe 15 außer Eingriff kommt. Das zuvor drehfest gekuppelte Sonnenrad 9 bleibt in seiner Lage, das Sonnenrad 10 bleibt weiterhin drehbar auf der Schiebehülse 13.

Der Drehmomentenfluß ist nun wie folgt:

Kettenzahnkranz auf Antreiber 3 mit Innenverzahnung 3b - Außenverzahnung 14b der Kupplungsbuchse 14 mit Außenverzahnung 14a - Hohlrad-Innenverzahnung 11b - Hohlrad 11 mit Antriebssperrklinken 19 - Innengesperre 1b in der Nabenhülse 1. - Der Planetenradträger selbst wird langsamer angetrieben, so daß die Sperrklinken 18 auf dem Bremskonus 17 von der Nabenhülse 1 überholt werden.

Zur Schaltstellung 2. Gang (großer Berggang) wird mittels der Schalteinrichtung der Schubklotz 12 noch mehr nach axial rechts gezogen, so daß über die Kupplungsbuchse 14 das Hohlrad 11 gegen die Spannung der Druckfeder 36 soweit verschoben wird, daß die Sperrklinken 19 auf dem Hohlrad an der Schaltkonusfläche 1c der Nabenhülse 1 außer Eingriff gebracht werden.

Die Axialbewegung des Schubklotzes relativ zur Schiebehülse 13 wird durch einen axial langen Schlitz 13c ermöglicht. Die Schiebehülse 13 ist in der in Figur 1 erkennbaren axialen Lage verblieben, die im Zusammenhang mit der Schaltstellung 4. Gang erwähnte drehfeste Kupplung des Sonnenrades 9 mit der Schiebehülse 13 besteht unverändert weiterhin. Entsprechend ist das Sonnenrad 10 drehbar auf der Schiebehülse 13.

Der Drehmomentenfluß im 2. Gang (großer Berggang) ist folgender:

Kettenkranz auf Antreiber 3 mit Innengesperre 3b - Außenverzahnung 14b der Kupplungsbuchse mit Außenverzahnung 14a - Innenverzahnung 11b im Ansatz des Hohlrades 11 - Innenverzahnung 11a des Hohlrades - Planetenstufenrad 8b - Stufenrad 8a am Sonnenrad 9 abrollend - Lagerbolzen 7 des axial festliegenden Planetenradträgers - Planetenradträger 6 mit Bremskonus 17 auf dem Stellgewinde 6a - Sperrklinkensatz 18 - Innengesperre 1a der Nabenhülse 1.

Zur Schaltstellung 1. Gang (kleiner Berggang) wird mittels der Schaltbetätigung der Schubklotz 12 noch weiter nach axial rechts gezogen, wobei nunmehr die Schiebehülse 13 infolge Anschlagens des Schubklotzes an das Ende des Längsschlitzes 13c selbst gegen die Druckfeder 34 nach axial rechts verschoben und dabei auch die Feder 32 komprimiert wird. Dadurch ist die zuvor noch bestehende Kupplungsverbindung zwischen dem Sonnenrad 9 und der Schiebehülse 13 gelöst worden, weil das Sonnenrad 9 der Verschiebebewegung der Schiebehülse 13 nicht mehr folgen kann, sondern infolge Anliegens des benachbarten Sonnenrades 10 an einer Zwischenscheibe 16 axial festgelegt wird. Diese Zwischenscheibe 16 ist auf den Klauen 6b des axial festliegenden Planetenradträgers 6 angebracht. - Die axial nach weiter rechts verschobene Schiebehülse 13 bildet mit ihren Kupplungsklauen 13b nunmehr eine drehfeste Kupplung mit dem axial rechts an der Zwischenscheibe 16 anliegenden Sonnenrad 10. Die Schiebehülse 13 selbst wird auch in dieser Lage von den Achsklauen 5a drehfest auf der Nabenachse 5 gehalten.

Der Drehmomentenfluß in der Schaltstellung 1. Gang ist wie folgt:
Kettenkranz auf Antreiber 3 mit Innenverzahnung 3b - Außenverzahnung 14b der Kupplungsbuchse 14 mit Außenverzahnung 14a - Innenverzahnung 11b im Hohlradansatz - Innenverzahnung 11a des Hohlrades 11 - Planetenstufenrad 8b auf Sonnenrad 10 kämmend - Planetenradlagerbolzen 7 im Planetenradträger 6 - Bremskonus 17 auf Stellgewindeansatz 6a - Sperrklinkensatz 18 in Innengesperre 1a der Nabenhülse 1 eingreifend.

Wie sich aus der vorstehenden Schilderung deutlich ergibt, weist die Ausführungsform einer erfindungsgemäßen Mehrgangnabe mit mehr als drei Gängen insbesondere eine Anordnung von konzentrischen Hülsenelementen auf, mit deren relativer Verschiebung zueinander gegen Federspannung die Gangumschaltung bewirkt wird. Es sind dies zum einen die radial äußere Kupplungsbuchse 14, zum anderen gehört zu dieser Hülsenanordnung die auf der Schiebehülse 13 verschiebbare Zwischenhülse 29, welche unmittelbar vom Schubklotz 12 gesteuert, ihrerseits die Sonnenräder 9 und 10 axial steuern, und schließlich die radial innere Schiebehülse 13 selbst, welche unmittelbar auf der Nabenachse 5 verschiebbar ist und entsprechend der axialen Lage zur wechselweisen drehfesten Kupplung mit dem Sonnenrad 9 bzw. Sonnenrad 10 ausgebildet ist. Dabei ist zur Erzielung einer ständigen Kupplungsbereitschaft entweder an der Schiebehülse 13 oder auch an einem der Sonnenräder 9 bzw. 10, vorzugsweise am kleinen Sonnenrad 9 ein System von Abweisschrägen, auch Einweiseflanken genannt, vorgesehen. - Die bei der Hülsenanordnung vorhandenen konzentrischen Druckfedern 28 und 34 können zweckmäßig mittels entsprechender Endkappen mit Axiallänge von Teilen voneinander distanziert werden.

Die vorstehende Beschreibung eines Ausführungsbeispieles einer Mehrgangnabe mit mehr als drei Gängen zeigt deutlich, daß lediglich ein einziges Planetengetriebe mit Planetenstufenrädern auf einem axial festliegenden Planetenradträger und mit einem axial verschiebbaren Hohlrad sowie wechselweise drehfest kuppelbaren Sonnenrädern unterschiedlicher Zähnezahl angewendet wird.

Dabei erfolgt die Steuerung der vorbeschriebenen fünf Gangschaltstugen ausschließlich von einer Seite der Nabenachse her mittels eines einzigen Schaltelements, wovon hier lediglich der Schubklotz 12 an der Zugstange 12a mit Zugkette 12b gezeigt ist.

Die vorbeschriebene Schaltnabe mit mehr als drei Gängen hat außer der äußerst einfachen und zuverlässigen Steuerung von lediglich einer Nabenseite her noch den Vorteil, daß in der Nabe eine Rücktrittbremseinrichtung untergebracht werden kann. Diese Rücktrittbremseinrichtung hat beispielsweise bei einem Bremsvorgang aus dem Fahren mit dem zuletzt geschilderten 1. Gang folgende Betriebsweise:
Bei Rückwärtsdrehen des Antreibers 3 wird diese Drehbewegung über den Drehmomentenpfad des 1. Ganges geleitet. Der rückwärtsdrehende Planetenradträger 6 verschiebt mittels seines Stellgewindes 6a den von der Friktionsfeder 20 gegen Mitdrehen gehaltenen Bremskonus 17 nach axial links, wodurch der am Hebelkonus 2 drehfest gehaltene Bremsmantel 24 innerhalb der Nabenhülse 1 im Bremssinn aufgespreizt wird. - Die Antriebssperrklinken 18 bleiben bei der Rückwärtsdrehung des Systems wirkungslos.

Aufgrund der axialen Klauen 6b am Planetenradträger 6 mit entsprechenden Schrägflächen wird im Zusammenwirken mit der Mitnehmerscheibe 15 auf der Kupplungsbuchse 14 und dem Hohlrad 11 mit Ansatzteil erreicht, daß nicht nur eine ständige Antriebsbereitschaft sondern ebenso eine stete Bremsbereitschaft besteht. Zu dieser ständigen Kupplungsbereitschaft innerhalb des Naben-Getriebesystems tragen auch die bereits erwähnten Schrägflächen, auch Einweiseflanken genannt, entweder an der Schiebehülse 13 oder einem der Sonnenräder 9 bzw. 10 bei.

Der Bremsvorgang bei der Gangschaltstellung 2. und 3. Gang (großer Berggang bzw. Normalgang) erfolgt jeweils mit der kleineren Getriebeübersetzung, die durch den Drehmomentenfluß über das Sonnenrad 9 gegeben ist.

Bei einer Schaltstellung 4. bzw. 5. Gang wird das Nabengetriebe beim Bremsvorgang umgangen. In diesen beiden Schaltstellungen ist - wie beschrieben - die Kupplungsbuchse 14 über die Mitnehmerscheibe 15 unmittelbar mit dem Planetenradträger 6 verbunden. Dieser Drehmomentenweg bleibt beim Rückwärtsdrehen des Antreibers 3 erhalten, so daß ohne zwischengeschaltete Getriebestufen der Bremskonus 17 vom rückwärtsdrehenden Planetenradträger 6 verschoben wird mit der Folge eines Aufspreizens der Bremsmantelteile 24, wodurch in bekannter Weise eine Bremsung der Nabenhülse 1 bewirkt wird. Die beim Antrieb im 4. bzw. 5. Gang wirksamen Sperrklinken 19 auf dem Hohlrad 11 bleiben hierbei unbeteiligt.

Die für eine Schaltnabe mit mehr als drei Gängen, welche wie vorstehend beschrieben worden ist, von einer Seite der Nabenachse her mittels eines einzigen Elements steuerbar ist, beispielsweise verwendbaren einzelnen Bauelemente werden nachstehend gesondert beschrieben anhand der schematischen Zeichnungsfiguren 2 bis 28.

Das Ziel der nachstehend beschriebenen Elemente einer Mehrgangnabe ist es, eine mit mehr als drei Gängen ausgestattete und eine Rücktrittsbremseinrichtung aufweisende Nabe zu schaffen, die ein Höchstmaß an Betriebssicherheit, kombiniert mit ständiger Bremsbereitschaft bietet.

Die folgenden Beschreibungen beziehen sich alle für eine Nabe, dessen einziges Planetengetriebe mit Stufenplanetenrädern ausgestattet ist, welches mit zwei wechselweise festsetzbaren Sonnenrädern kombiniert ist. Insbesondere wird hier auf Maßnahmen eingegangen, die den beim Umschalten der Sonnenräder gegebenenfalls auftretenden, die Funktionssicherheit der Mehrgangnabe beeinträchtigenden Leerlauf der Sonnenräder verhindern können.

Weiterhin ergeben sich aus der nachstehenden Beschreibung spezieller Konstruktionselemente Lösungswege, wie für den Benutzer derartiger Naben die Handhabung durch Bedienung nur eine Schaltzuges, der von nur einer Nabenseite auf die Getriebeelemente steuernd einwirkt, wesentlich vereinfacht werden kann.

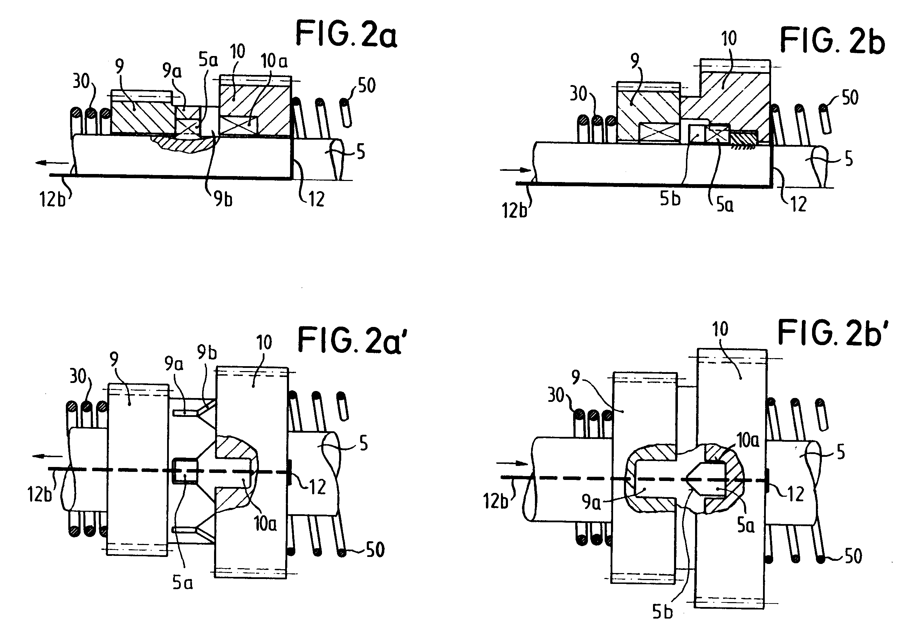

Bei den Lösungsmöglichkeiten sind mehrere Gruppen zu unterscheiden. So zeigen die Figuren 2 bis 11 Maßnahmen zur Verhinderung von Leerlauf und zwar durch eine Zwangssteuerung im Bereich der Sonnenräder, wobei spezielle Ausgestaltungen und Formgebungen der Kupplungselemente getroffen werden.

Die Figuren 2a und 2a′ zeigen eine mit einer Kupplungsverzahnung versehenen Nabenachse 5. Die Kupplungszähne 5a haben parallele Flanken zum Eingriff in jeweils eines der beiden auf der Nabenachse verschiebbaren Sonnenräder 9 bzw. 10. Das Kupplungsprofil eines der beiden Sonnenräder - in der Figur das kleinere Rad - ist als axialer Fortsatz 9a des Sonnenradkörpers ausgebildet und mit Schrägflächen 9b, auch Einweiseflanken genannt, ausgestattet.
Beim Umschalten der beiden Sonnenräder 9 bzw. 10, d.h. der wechselweisen drehfesten Kupplung tritt üblicherweise ein Bereich auf, in dem die Kupplungszähne in keines der Sonnenräder 9 bzw. 10 eingreifen dürfen, um das Getriebe nicht zu blockieren. In diesem Übergangsbereich bewirken die Schrägflächen - im vorliegenden Fall am kleinen Sonnenrad 9 - bedingt durch die relative Drehung der Sonnenräder 9 bzw. 10 zueinander, daß eben das kleinere Sonnenrad 9 nach axial links abgewiesen wird, während gleichzeitig das größere Sonnenrad 10 durch die Kraft einer hier nicht gezeigten Feder nach links verschoben wird und so mit den Kupplungszähnen 5a der Nabenachse 5 in Wirkverbindung treten kann. So ist mit einfachen Mitteln sichergestellt, daß ständig eines der beiden Sonnenräder 9 bzw. 10 mit der Nabenachse 5 gekuppelt und so die Mehrgangnabe als solche antriebs- oder bremsbereit ist.

Die Verstellung der Sonnenräder 9 und 10 erfolgt durch einen Schubklotz 12, der durch ein Betätigungsseil 12b nach links gezogen werden kann gegen die Wirkung der Feder 30. An dem Sonnenrad 10 liegt eine Feder 50 an, die das Sonnenrad 10 nach links zu schieben versucht. In den Fig. 2a und 2a′ ist diejenige Stellung gezeichnet, in der das Sonnenrad 9 gegenüber der Nabenachse 5 durch den Eingriff der Kupplungszähne 5a in die achsparallelen Klauenflanken 9a unverdrehbar festgelegt ist, so daß das Sonnenrad 9 als Teil des Planetengetriebes wirksam ist, während das Sonnenrad 10 frei durchdrehen kann. Wenn durch Ziehen des Schaltzugs 12 nach links die beiden Sonnenräder 9 und 10 gemeinsam so weit nach links geschoben werden, daß die Zahnlücken 10a die Kupplungszähne 5a voll aufnehmen, so ist diejenige Schaltstellung erreicht, in der das Sonnenrad 10 als Teil des Planetengetriebes wirksam ist und das Sonnenrad 9 frei mitdreht. Es ist davon auszugehen, daß die axiale Länge der Kupplungszähne 5a maximal so groß ist als die axiale Länge der Schrägen 9b, so daß die Kupplungszähne 5a in keinem Fall gleichzeitig im Eingriff mit den geradlinigen Flanken 9a und den geradlinigen Flanken 10a sein können. Wenn nun beim Verschieben der Sonnenräder 9 und 10 zum Zwecke des Gangschaltens nach links infolge einer Fehleinstellung des Betätigungsschaltzugs 12b die Flanken 10a nicht in Eingriff mit den Kupplungszähnen 5a kommen und andererseits die Kupplungszähne 5a nicht mehr im Eingriff mit den Flanken 9a sind, so kann auch kein Unglück geschehen: wenn dann nämlich durch Drehen des Antreibers das Planetengetriebe umläuft, so wird das Sonnenrad 9 durch das Zusammenwirken der Kupplungszähne 5a mit den schrägen Flanken 9b gegen die Wirkung der relativ harten Feder 30 nach links verschoben. Dann kann das Sonnenrad 10 unter der Wirkung der weicheren Feder 50 nach links folgen, so daß die Flanken 10a dann in Eingriff mit den Kupplungszähnen 5a kommen, so daß auch jetzt wieder eines der Sonnenräder 9, 10, nämlich das Sonnenrad 10, auf der Nabenachse 5 gegen Verdrehung gesichert ist und damit das Planetengetriebe drehmomentübertragend wirksam ist, d. h. also sowohl ein Antriebsmoment als insbesondere auch ein Bremsmoment übertragen werden kann. Ist die Verschiebung der Sonnenräder 9 und 10 nach links so weit gegangen, daß die Zahnlücken 10a die Kupplungszähne 5a nur teilweise aufnehmen, so wird das Sonnenrad 9 durch die Wechselwirkung der Kupplungszähne 5a mit den schrägen Flanken 9b ebenfalls nach links verschoben und das Sonnenrad 10 kann nach links so lange folgen, bis die Kupplungszähne 5a in axialer Richtung vollständig von den Zahnlücken 10a aufgenommen sind.

Der in den Fig. 2a und 2a′ gezeigte Zustand ist dadurch erreicht worden, daß der Schaltzug 12b nach rechts losgelassen worden ist. Wenn dabei der Zustand gemäß Fig. 2 und 2a′ erreicht worden ist, so ist alles in Ordnung: das Sonnenrad 9 ist auf der Nabenachse 5 drehfest gelagert und das Sonnenrad 10 kann frei drehen. Sollte aufgrund einer Fehleinstellung des Schaltzuges 12b das Sonnenrad 9 die in Fig. 2a und 2a′ dargestellte Stellung nicht erreicht haben, so daß die Kupplungszähne 5a nur eine geringe axiale Überdeckung mit den geraden Flanken 9a haben, so ist gleichwohl das Sonnenrad 9 als Teil des Planetengetriebes wirksam und das Sonnenrad 10 kann sich frei drehen. Sollte dann infolge einer Überlastung der nur mit kurzer Überdeckung zusammenwirkenden Bereiche der Kupplungszähne 5a und der geraden Flanken 9a eine Verformung in diesen Bereichen eintreten, die dazu führt, daß das Sonnenrad 9 nicht mehr drehfest festgelegt ist, so kommen die Kupplungszähne 5a wieder in Eingriff mit den schrägen Flanken 9b. Dann wird das Sonnenrad 9 durch das Zusammenwirken der Kupplungszähne 5a und der Flanken 9b wieder nach links geschoben, so daß das Sonnenrad 10 mit den Flanken 10a wieder in Eingriff mit den Kupplungszähnen 5a treten kann und somit wieder das Sonnenrad 10 als Teil des Planetengetriebes wirksam wird. Auf diese Weise ist sichergestellt, daß auch bei Fehleinstellungen des Schaltzugs 12b (die natürlich immer möglichst bald beseitigt werden sollen, um eine übermäßige Belastung von Getriebeteilen zu vermeiden) immer eines der Sonnenräder 9, 10 als Teil des Planetengetriebes wirksam ist, also immer ein Antriebsmoment und insbesondere auch ein Bremsmoment übertragen werden kann.

Die Figuren 2b und 2b′ stellen eine Ausführung ähnlich den Figuren 2a und 2a′ dar, jedoch sind hier die Schrägflächen, die das zwangsläufige Abweisen jeweils eines der beiden Sonnenräder 9 bzw. 10 im Übergangsbereich bewirken sollen - im Bild des kleineren Sonnenrades 9 - an den Kupplungszähnen 5a eines mit der Nabenachse 5 fest verbundenen, ringförmig die Nabenachse umschließenden Bauteiles angeordnet.

Die in den Figuren 2a, 2a′ und 2b, 2b′ beschriebenen Varianten haben den Vorteil, daß auf der Nabenachse 5 nur eine einzige Kupplungsverzahnung 5a erforderlich ist.

Die Anordnung nach den Fig. 2b und 2b′ verhält sich genauso wie diejenige nach den Fig. 2a und 2a′, wobei nur die Schrägen 5b nunmehr an dem Schaltzahn 5a angebracht sind.

Die Figuren 3 und 3a zeigen eine Anordnung, bei der die beiden Sonnenräder 9 und 10 zum Gangwechsel zwischen den beiden Kupplungsverzahnungen 5a der Nabenachse 5 verschoben und auf diese Weise jedes Sonnenrad 9 bzw. 10 mit seiner hierfür vorgesehenen Kupplungsverzahnung 9a bzw. 10a in Eingriff gebracht werden kann. Die Vermeidung von Leerlauf im Übergangsbereich zwischen den einzelnen Gangschaltstufen wird wieder über Schaltschrägen, die am Kupplungsprofil eines der Sonnenräder 9 bzw. 10 - im Bild am kleineren Sonnenrad 9, 9b - angeformt sind, bewirkt.

In den Fig. 3 und 3a wird davon ausgegangen, daß die Feder 50 stärker als die Feder 30 ist und die beiden Sonnenräder 9, 10 durch die Schaltvorrichtung gegen den Druck der Feder 50 nach rechts geschoben werden. Das Verhalten der Anordnung nach Fig. 3 und 3a entspricht aufgrund der Schrägflanken 9b dem Verhalten der Ausführungsform nach den Fig. 2a und 2a′. Eine Besonderheit, die sich aufgrund des Zusammenwirkens der beiden Sonnenräder 9 und 10 mit verschiedenen Kupplungszähnen 5a und 5a′ ergibt, ist das Vorhandensein einer Druckfeder 51 zwischen den beiden Sonnenrädern 9 und 10. Wenn von der Schaltstellung gemäß den Fig. 3 und 3a in eine Schaltstellung geschaltet wird, bei der die Kupplungszähne 5a′ in die Kupplungsverzahnung 10a eingreifen, so könnte der Fall eintreten, daß die axial gerichteten Stirnflächen der Kupplungsverzahnung 10a gegen axiale Stirnflächen der Kupplungszähne 5a′ anschlagen und die Kupplung des Sonnenrads 10 mit den Kupplungszähnen 5a′ nicht hergestellt werden kann. Dann nähern sich die Sonnenräder 9 und 10 kurzfristig unter Kompression der Feder 51 an, solange, bis infolge des Weiterdrehens des Planetengetriebes die Kupplungszähne 5a′ unter dem Druck der komprimierten Feder 51 in die Kupplungsverzahnung 10a hineinspringen können.

Die Figuren 4 und 4a geben ein Ausführungsbeispiel wieder, dessen Funktionsweise ähnlich der in den Figuren 3 und 3a beschriebenen Anordnung ist. Abweichend zu der Ausgestaltung gemäß den Figuren 3 und 3a sind hier die Abweisflächen 5b zur zwangsweisen Verschiebung der Sonnenräder 9 bzw. 10 an einer der beiden Kupplungsverzahnungen 5a, 5a′ der Nabenachse 5 angeordnet - im Bild an der für das kleinere Sonnenrad 9 vorgesehenen Verzahnung 5b.

Die in den Figuren 3, 3a und 4, 4a beschriebenen Ausführungsformen haben den Vorteil, daß Jede der Achsverzahnungen 5a speziell für ein optimales Kupplungsverhalten mit dem jeweiligen Sonnenrad 9 bzw. 10 abgestimmt werden kann.

Die Figuren 5 und 5a zeigen ein Ausführungsbeispiel, bei dem die beiden Sonnenräder 9 bzw. 10 axial auf nicht näher dargestellte Weise fixiert sind. Zum Umschalten wird ein axial verschiebbar ausgebildetes im Bereich axial zwischen den Sonnenrädern 9 und 10 angeordnetes Kupplungselement mit dem Innenprofil des jeweils einzuschaltenden Sonnenrades 9 bzw. 10 in Eingriff gebracht.

Im Übergangsbereich zwischen den Gängen bewirken die Schrägflächen 9b bzw. 10b am Kupplungsprofil 9a bzw. 10a eines der beiden Sonnenräder 9 bzw. 10 das Abweisen und zwangsweise Einkuppeln in das andere Sonnenrad 9 bzw. 10.

In Figur 6 ist eine Ausführung dargestellt, die weitgehend mit derjenigen gemäß den Figuren 5 und 5a identisch ist. Lediglich die Schrägflächen, die das zwangsweise Einkuppeln bewirken, sind statt an den Sonnenrädern nun an dem Kupplungselement 5a′, 5b angeordnet und weisen auf eines der beiden Sonnenräder 9 bzw. 10.

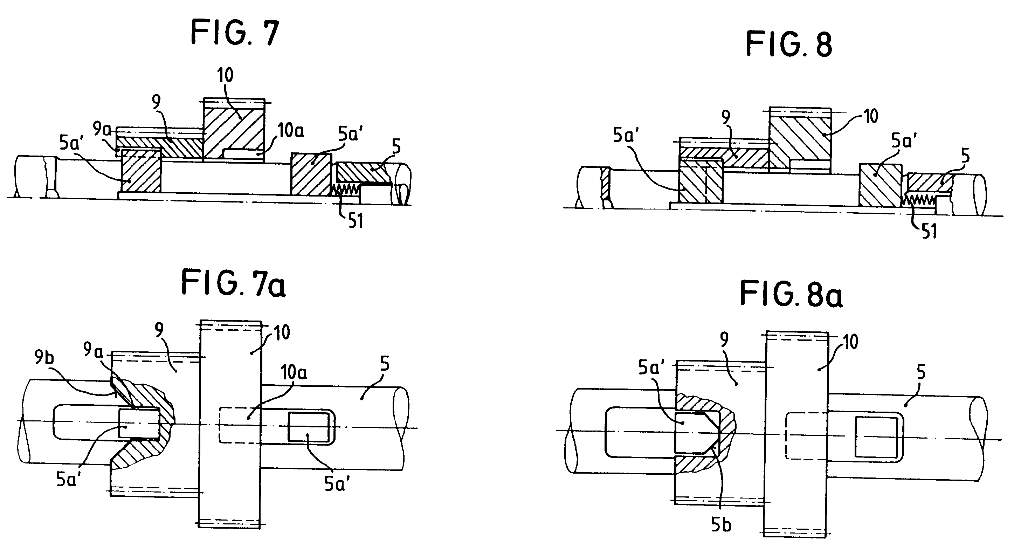

Die Figuren 7 und 8 zeigen Je eine Variante mit axial festgelegten Sonnenrädern 9 bzw. 10. Es sind zwei Kupplungselemente verschiebbar an der Nabenachse 5 vorgesehen. Zum Umschalten werden die außerhalb des Sonnenradpaketes 9/10 angeordneten Kupplungselemente 5a′ wechselweise mit dem einen oder anderen Sonnenrad-Kupplungsprofil 9a bzw. 10a zum Eingriff gebracht.

In der Ausführungsform nach Fig. 7, 7a, 8, 8a übernimmt die Druckfeder 51 wieder die Funktion der Druckfeder 51 aus der Ausführungsform von Fig. 3 und 3a.

Die Schaltschrägen 9b zur Zwangsumsteuerung im Übergangsbereich sind dabei in der Ausführung gemäß Figur 7 und 7a an dem Innenprofil eines der beiden Sonnenräder 9 angeordnet, bei der Ausführung gemäß Figur 8 jedoch an einem der beiden Kupplungselemente 5a′, 5b.

Die Figur 9 stellt eine Ausführung dar, bei der im Bereich zwischen den Sonnenrädern 9 und 10 eine auf einer drehfesten Schiebehülse 13 angeordnete Kupplungsverzahnung 13a zum wechselweisen Festhalten eines der beiden Sonnenräder 9 bzw. 10 vorgesehen ist. Die Sonnenräder 9 bzw. 10 sind axial fixiert.

Eines der Sonnenräder - im Bild das kleinere Sonnenrad 9 - ist auf der Nabenachse 5, das andere Sonnenrad 10 auf der Schiebehülse 13 gelagert, welch letztere drehfest, jedoch axial verschiebbar auf der Nabenachse angeordnet ist.
Zur Vermeidung von Leerlauf zwischen den Gängen ist die Kupplungsverzahnung eines der Sonnenräder 9 bzw. 10 mit Abweisschrägen 9b versehen, wie Figur 9a erkennen läßt. Es ist Jedoch auch möglich, die Kupplungsverzahnungen 9a bzw. 10a der Sonnenräder 9 bzw. 10 parallel auszubilden und die Abweisschrägen, die nach axial links oder rechts gerichtet sein können, an der Kupplungsverzahnung 13a der Schiebehülse 13 anzubringen.

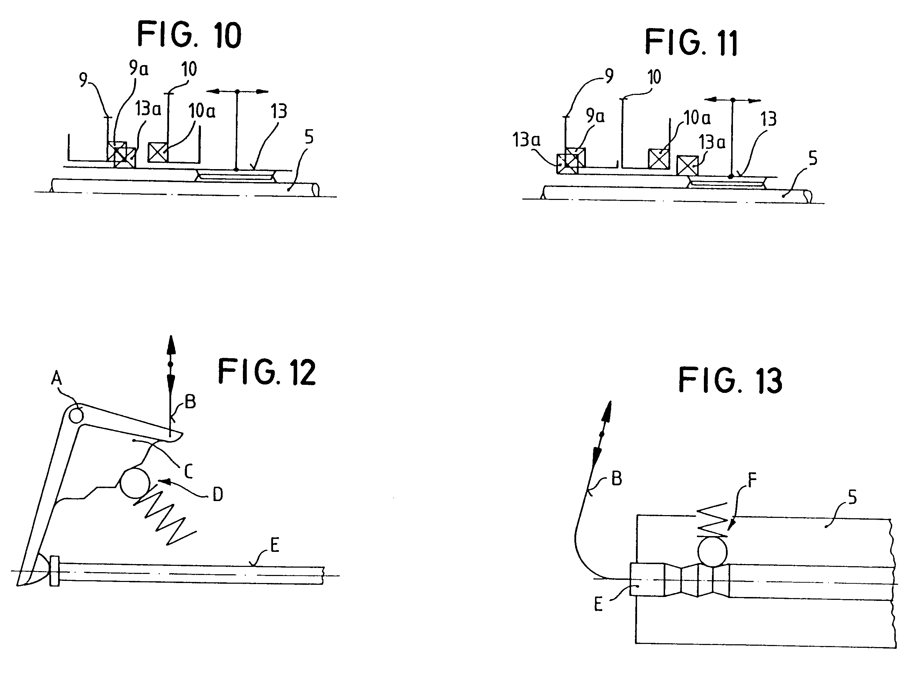

Die Figuren 10 und 11 zeigen jeweils eine Ausführung, bei der die axial festgelegten Sonnenräder 9 bzw. 10 auf einer drehfesten Schiebehülse 13 gelagert sind, wobei diese Schiebehülse 13 auf der Nabenachse 5 drehfest jedoch axial verschiebbar angeordnet ist.
Die Kupplungszähne der Schiebehülse 13 zum Eingriff in die Innenprofile 9a bzw. 10a der Sonnenräder 9 bzw. 10 ist in Figur 10 axial zwischen den Sonnenrädern vorgesehen, während in Figur 11 axial außerhalb der Sonnenräder 9 und 10 die Kupplungszähne 13a an der Schiebehülse 13 vorgesehen sind. Durch Schalten der Schiebehülse 13 auf der Nabenachse 5 nach axial links oder rechts, läßt sich wahlweise das große oder das kleine Sonnenrad, 9 bzw. 10, drehfest mit der Nabenachse 5 kuppeln. Zur Vermeidung von Leerlauf zwischen den Gängen kann entweder das Kupplungsprofil 9a bzw. 10a eines der Sonnenräder 9 bzw. 10 oder die Kupplungszähne 13a der Schiebehülse 13 mit Abweisschrägen auch Einweiseflanken genannt, ausgestattet sein.

In den Figuren 12 bis 21 sind Systeme gezeigt, die zum Umschalten der beiden Sonnenräder dienen und dabei gleichzeitig verhindern, daß Schaltstellungen zwischen den Gängen eingelegt werden können, wodurch Leerlauf entstehen kann.

Die Figur 12 zeigt einen Umlenkhebel A der über einen Zug-Druck-Schaltzug B betätigt wird und an einer Kurve C eine Rastung D aufweist, die nur solche Schaltstellungen zuläßt, welche in der Getriebenabe zu den vorgesehenen funktionssicheren Überdeckungsverhältnissen zwischen den wechselweise zu kuppelnden Sonnenrädern und der Nabenachse führen.

Figur 13 stellt einen Schaltstift E dar, der mit der Nabenachse 5 verrastet ist mittels einer Reihe von Rastkerben, welche mit einer Rastkugel F zusammenwirken können. Betätigung des Schaltstiftes E erfolgt über einen Zug-Druck-Schaltzug B, die Rastung F läßt keine funktionsstörenden Zwischenstellungen zu.Die Rastung kann auch an einem auf der Achse befestigten Bauteil erfolgen. Die Figuren 14 und 15 zeigen zwei Varianten, bei den jeweils eines der Sonnenräder 9 bzw. 10, welche für sich axial verschiebbar sind, entweder mit der Nabenachse 5 oder dem Planetenradträger 6 mittels Rastelementen G bzw. H verrastbar ist.

Die Figuren 16, 17 und 18 stellen Schaltsysteme dar, bei denen eine mit der Nabenachse 5 drehfeste, aber axial verschiebbare Schiebehülse 13 verrastet ist.

In Figur 16 erfolgt diese Verrastung zwischen der Schiebehülse 13 und einem der axial festgelegten Sonnenräder 9 bzw. 10.

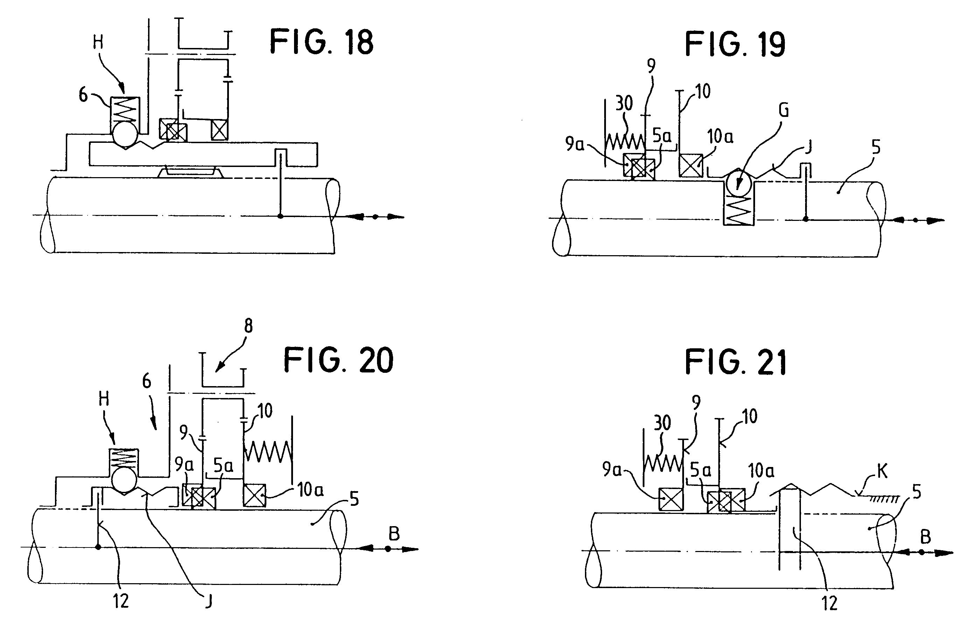

In der Darstellung gemäß Figur 17 wird die Verrastung zur Nabenachse 5 hin, und in der Darstellung gemäß Figur 18 zum Planetenradträger 6 vorgenommen.

Die Figuren 19 und 20 zeigen Varianten, bei denen zum Umschalten der auf der Nabenachse 5 verschiebbar gelagerten Sonnenräder 9 bzw. 10 eine Hilfshülse I, die zur Nabenachse 5 oder zum Planetenradträger 6 verrastet ist, verwendet wird.

Die Figur 21 stellt eine Anordnung dar, bei welcher der Schubklotz 12 selbst in einem axial fixierten Federelement K zur Vorgabe der richtigen Schaltwege einrastet. Die Sonnenräder 9 und 10 sind axial verschiebbar zur Nabenachse 5 angeordnet, welche ihrerseits Kupplungszähne 5a zum Zusammenwirken mit den Kupplungsflächen 9a bzw. 10a aufweist. Der Schubklotz 12 kann dabei auf eine Schiebehülse 13, eine Hilfshülse I oder wie gezeigt, direkt auf die Sonnenräder 9 bzw. 10 wirken. - Auch diese Anordnung wird, wie alle übrigen vorgenannten Systeme auch, ebenfalls über einen Zug-Druck-Schaltzug B betätigt.

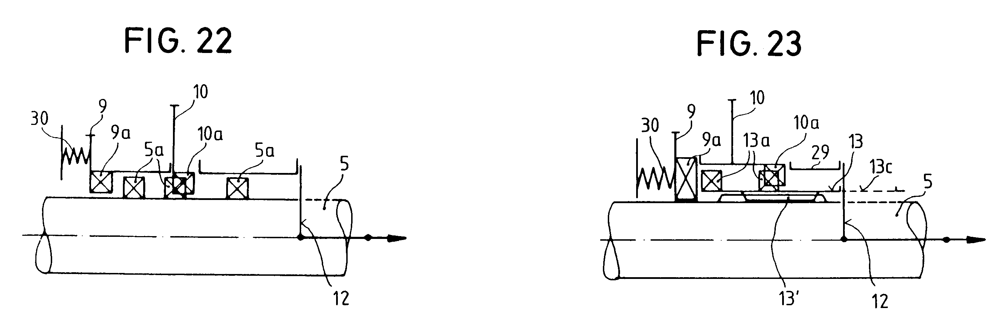

In den Figuren 22 bis 26 sind Schaltungssysteme gezeigt, die in nur einer Richtung geschaltet werden müssen und auf diese Weise einen Nabenaufbau mit insgesamt nur einem Schaltzug oder einem Schaltstift als Steuerelement ermöglichen.

Die Figur 22 stellt eine Ausführung dar, bei der die Nabenachse 5 mit drei in einem gewissen Abstand zueinander angeordneten Kupplungsverzahnungen 5a ausgestattet ist. Die beiden axial verschiebbaren, auf der Nabenachse gelagerten Sonnenräder 9 und 10 weisen ihrerseits Kupplungsverzahnungen 9a bzw. 10a auf, die mit den Kupplungsverzahnungen 5a auf der Nabenachse 5 wahlweise in Eingriff bringbar sind. Dabei geht die Umschaltung folgendermaßen vor sich:
In der Ausgangsstellung ist - wie z.B. in der Figur 22 dargestellt - das größere Sonnenrad 10 mit der axial mittleren Nabenachs-Verzahnung 5a gekuppelt.
Zum ersten Gangwechsel vom 5. zum 4. Gang wird der Schubklotz 12 soweit nach axial rechts verschoben, daß durch die Kraft der angedeuteten Feder 30 das größere Sonnenrad 10 entkuppelt und zugleich das kleinere Sonnenrad 9 in die axial linke Achsverzahnung 5a eingekuppelt wird.
Im 3. und 2. Gang bleibt die Schaltstellung der Sonnenräder 9 bzw. 10 unverändert.

Durch weiteres Verschieben des Schubklotzes 12 nach axial rechts wird das kleine Sonnenrad 9 aus der mittleren Verzahnung 5a der Nabenachse 5 herausgedrückt und das große Sonnenrad tritt mit der axial rechten Kupplungsverzahnung 5a der Nabenachse 5 in Wirkverbindung zum 1. Gang. - Das Schalten der Gangstufen erfolgt in einer Richtung des Schubklotzes 12.

Die Figur 23 zeigt eine andere Anordnung, welche außer den axial verschiebbaren Sonnenrädern 9 und 10 eine mit zwei Kupplungs verzahnungen 13a zum Eingriff in die Sonnenräder 9 bzw. 10 und einem Innenprofil 13′ zur drehfesten Kupplung mit der Nabenachse 5 ausgestattete Schiebehülse 13 aufweist. Eines der Sonnenräder - im Bild das kleinere Sonnenrad 9 - ist auf der Nabenachse 5 gelagert, das andere Sonnenrad 10 ist auf der Schiebehülse 13 gelagert.

Der Schaltvorgang ist folgender:
In der Ausgangsstellung (Figur 23 = 5. Gang) ist das große Sonnenrad 10 mit seinem Kupplungsprofil 10a im Eingriff mit der axial rechten Kupplungsverzahnung 13a der Schiebehülse 13.
Wird der Schubklotz 12 nun nach axial rechts bewegt, bringt die angedeutete Feder 30 das kleine Sonnenrad 9 nach rechts in Wirkverbindung mit der linken Kupplungsverzahnung 13a der Schiebehülse 13 und löst dabei die Kupplungsverbindung zwischen dem großen Sonnenrad 10 und der Schiebehülse 13.
Im 3. und 2. Gang bleibt die Stellung der Sonnenräder 9 bzw. 10 unverändert.
Durch nochmaliges Weiterschalten des Schubklotzes nach axial rechts wird nun die Schiebehülse 13 in Folge Anlage des Schubklotzes 12 an der axial rechten Begrenzung des Längsschlitzes 13c in der Schiebehülse 13 mit verschoben. Dabei löst sich die Kupplungsverbindung zwischen dem kleinen Sonnenrad 9 und der Schiebehülse 13, während gleichzeitig das große Sonnenrad 10 mit der Schiebehülse 13 wieder in Wirkverbindung tritt, was der Schaltstellung 1. Gang entspricht. - Die Schaltbetätigung erfolgt in dieser Ausführungsform in einer axialen Richtung.

In Figur 24 ist ein Aufbau gezeigt, der mit einer mit der Nabenachse 5 drehfest verbundenen, aber axial verschiebbaren Schiebehülse 13 mit zwei Kupplungsverzahnungen 13a zum Eingriff in die Kupplungsprofile 9a bzw. 10a der Sonnenräder 9 bzw. 10 ausgestattet ist. Auf dieser Schiebehülse 13 sind die beiden Sonnenräder 9 und 10 drehbar, aber axial fixiert im Planetenradträger gelagert.
Von der Ausgangsstellung - z.B. wie in Figur 24 dargestellt -, in der das große Sonnenrad 10 mit der axial rechten Kupplungsverzahnung 13a der Schiebehülse 13 zusammenwirkt, wird die Schiebehülse über den Schubklotz 12 nach axial rechts geschaltet. Dabei tritt die axial linke Kupplungsverzahnung 13a der Schiebehülse mit dem kleinen Sonnenrad 9 in Verbindung, während sich der Kupplungseingriff zwischen dem großen Sonnenrad 10 und der Schiebehülse 13 löst.

Durch nochmaliges axiales Weiterschalten der Schiebehülse 13 mittels des Schubklotzes 12 weiter in derselben Richtung löst sich deren linke Kupplungsverzahnung 13a vom kleinen Sonnenrad 9 und greift wieder in das Kupplungsprofil 10a des großen Sonnenrades 10 ein.

Bei den Anordnungen nach den Figuren 22, 23 und 24 können zur Vermeidung von Leerlauf zwischen den Gängen, wie schon in den Figuren 1 bis 8 beschrieben, die Kupplungszähne 5a der Nabenachse 5, die Kupplungszähne 13a der Schiebehülse 13 oder die Innenprofile 9a, 10a der Sonnenräder 9 bzw. 10 mit Schrägflächen zur Zwangssteuerung des Kupplungseingriffes ausgestattet sein. Außerdem können auch Vorkehrungen, wie sie im Zusammenhang mit Figur 9 im Hinblick auf die Schiebehülse 13 beschrieben sind, in Kombination mit den Anordnungen gemäß den Figuren 22, 23 und 24 einen Leerlauf zwischen den Gängen verhindern.

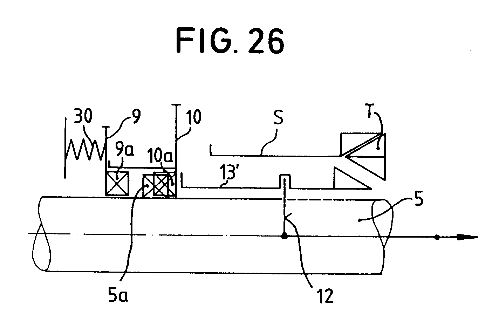

In den Figuren 25 und 26 ist jeweils ein System dargestellt, bei dem durch einen Hebel K oder auch durch ein Steigzahnsystem eine Bewegungsrichtungsumkehr einer speziellen Steuerhülse S erreicht wird.

In der Grundstellung ist jeweils das große Sonnenrad 10 mit der Kupplungsverzahnung 5a der Nabenachse 5 in Eingriff.
Durch Schalten des Schubklotzes 12 nach axial rechts wird durch die angedeutete Feder 30 das kleine Sonnenrad 9 in die Achsverzahnung 5a eingekuppelt und gleichzeitig die Verbindung zwischen der Nabenachse 5 und dem großen Sonnenrad 10 gelöst.
Wird noch weiter nach axial rechts geschaltet, trifft in der Ausgestaltung gemäß Figur 25 die Schiebehülse 13′ auf den Kipphebel K, der die Steuerhülse S nach axial links schiebt und damit auch das große Sonnenrad 10, welches somit wieder in die Achsverzahnung 5a einkuppelt, während das Sonnenrad 9 - gegen die Feder 30 - aus dem Kupplungseingriff mit der Achsverzahnung 5a geschoben wird. - Als Schaltelement für den Kipphebel K kann auch ein Schubklotz bzw.ein verschiebbares Kupplungsrad dienen. In Figur 26 trifft die Schiebehülse 13′ auf ein Steigzahnelement T, das sich dabei verdreht und dadurch die Steuerhülse S nach axial links verschiebt. Dadurch wird die Verbindung des kleinen Sonnenrades 9 mit der Achse 5, 5a wieder gelöst und das große Sonnenrad 10 durch entsprechende Verschiebung wieder eingekuppelt mit der Nabenachse 5. Mittels der Steigzahnanordnung T ist eine Schaltbetätigung in nur einer Richtung erforderlich.

Die Wirkungsweise der Fig. 26 kann man sich so vorstellen: wenn die Schiebehülse 13′ nach rechts gegen den die Nabenachse umschließenden Ring T anläuft, so bewirkt die unverdrehbare Hülse 13′ über eine erste Paarung von nicht dargestellten, gewindeartig zusammenwirkenden Nocken der Hülse 13′ und des Rings T eine Drehung des Rings T um die Nabenachse 5. Zwischen der Steuerhülse S und dem Ring T ist eine weitere Paarung von gewindeartig zusammenwirkenden Nocken angebracht, die bei der vorher beschriebenen Drehung des Ringes T eine Verschiebung der Steuerhülse S nach links bewirken.

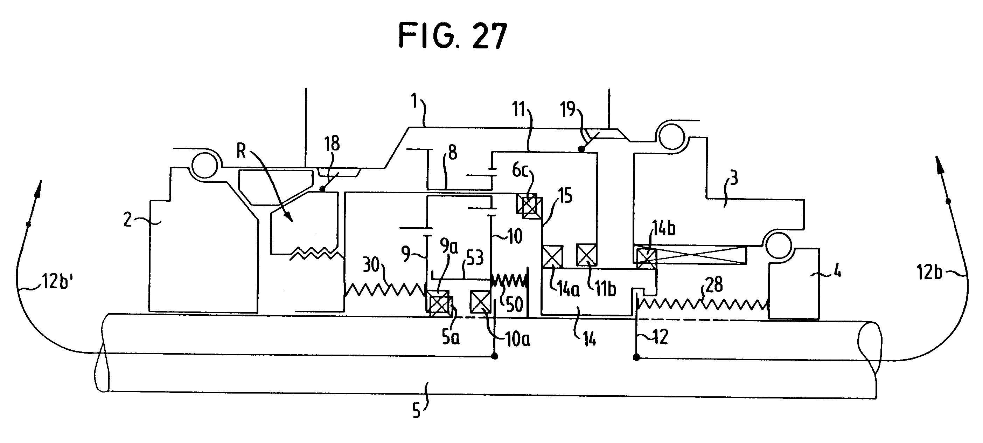

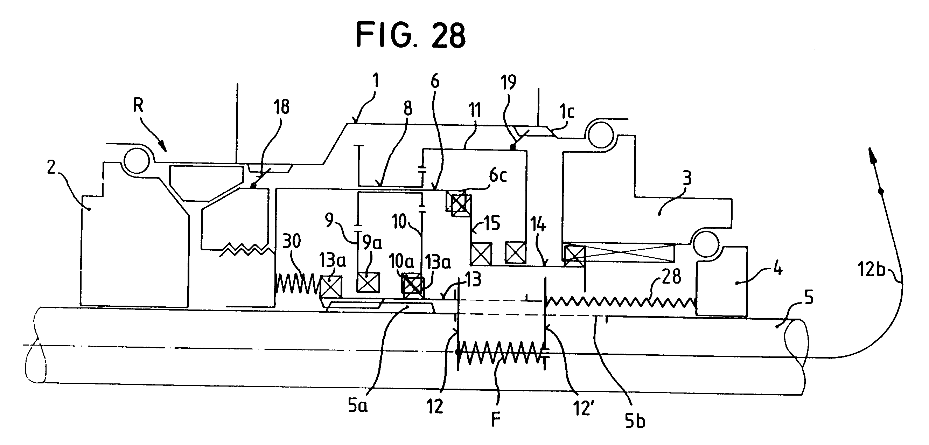

In den Figuren 27 und 28 sind Ausführungsbeispiele für den Aufbau einer Schaltnabe mit mehr als drei Gängen und einer Rücktrittbremseinrichtung schematisch gezeigt, bei denen die vorbeschriebenen speziellen Bauelemente zweckmäßig eingesetzt werden können.

In Fig. 27 ist eine Betätigung mit zwei Zugseilen 12b und 12b′ vorgesehen. In Fig. 27 befindet sich die Nabe im kleinen Schnellgang (4. Gang), weil das kleine Sonnenrad 9 über die Kupplungselemente 9a, 5a drehfest an der Nabenachse 5 festgelegt ist. Durch Ziehen des Zugseils 12b′ nach links kann das große Sonnenrad 10 mit dem Kupplungselement 10a nach links vershoben werden, so daß das Kupplungselement 10a in das Kupplungselement 5a eingreift und das Kupplungselement 9a aus dem Kupplungselement 5a nach links ausgeschoben wird, und zwar mit Hilfe des Ansatzes 53. Damit wird der erste Schnellgang (5. Gang) erreicht, in dem das große Sonnenrad 10 auf der Nabenachse feststeht. Zum Schalten vom 4. auf den 3. und vom 3. auf den 2. Gang wird - ausgehend vom 4. Gang gemäß Fig. 27 - das rechte Zugseil 12b gezogen, wie in der Ausführungsform nach Fig. 1. Zum Schalten auf den 1. Gang wird bei vollständig gezogenem Zugseil 12b das Zugseil 12b′ nach links gezogen, so daß das große Sonnenrad 10 wieder drehfest mit der Nabenachse 5 gekuppelt wird. Bei dieser Ausführungsform nach Fig. 27 kann eine Schrägenanordnung eingesetzt werden, wie sie z. B. in Fig. 2a und 2a′ dargestellt ist.

Figur 28 stellt ein weiteres Ausführungsbeispiel einer 5-Gang-Rücktrittbremsnabe in der Schaltstellung 5. Gang dar, bei der die Sonnenräder 9 und 10 auf einer drehfest gelagerten Schiebehülse 13 gelagert sind, axial jedoch am Planetenradträger festgelegt. Die Kupplung 14 zwischen dem Planetenradträger 6, dem Hohlrad 11 und dem Antreiber 3 ist ebenfalls von 3-Gang-Naben her bekannt. Die Gangumschaltung erfolgt bei dieser Nabe ebenfalls nur in einer Richtung und zwar auf folgende Weise: Durch Ziehen an dem einzigen Schaltzug 12b werden beide Schubklötze 12 und 12′ sowie unter der Wirkung der Feder 30 die Schiebehülse 13 sowei nach axial rechts verschoben, bis das große Sonnenrad 10 auf der Schiebehülse 13 ausgekuppelt und das kleine Sonnenrad 9 eingekuppelt ist mittels der Elemente 9a/13a. - 4. Gang -

Durch Weiterschalten, d.h. Ziehen am Schaltzug in der bisherigen Richtung wird nun die Verbindung zwischen dem Kupplungsrad 14, welches immer in den Antreiber 3 eingreift, mit dem Planetenradträger 6 gelöst und gleichzeitig das Hohlrad 11 mit dem Kupplungsrad 14 verbunden - 3. Gang. Werden die Schubklötze 12, 12′ noch weiter nach axial rechts gezogen, so steuern sich die Hohlrad-Sperrklinken 19 über die Schaltschräge 1c der Nabenhülse 1 aus und der axial rechte Schubklotz 12′ kommt im Achsschlitz 5b zur Anlage - 2. Gang -.

Wird der Schaltzug 12b nun gegen die Feder F bis zum Anschlag des Schubklotzes 12 am Schubklotz 12′ aus der Nabenachse 5 gezogen, nimmt der linksbefindliche Schubklotz 12 die Schiebehülse 13 nach axial rechts mit und löst dabei die zuvor bestehende Kupplung 9a/13a zwischen dem kleinen Sonnenrad 9 und der Schiebehülse 13, während die Schiebehülse 13 nun wieder in das große Sonnenrad 10 einkuppelt mittels der Elemente 10a/13a - 1. Gang -.

Die durch Rückwärtsdrehen des Antreibers 3 betätigbare Bremseinrichtung R ist in ihrem einfachen Aufbau bereits von 3-Gang-Schaltnaben her bekannt, so daß sich hier eine gesonderte Beschreibung der Bremseinrichtung erübrigt.

Die Ausführungsbeispiele einer 5-Gang-Nabe nach den Figuren 1, 27 und 28 lassen sich durch Wegfall der Bremseinrichtung R auch als Leerlauf-Naben ausbilden, wobei der Vorteil der Naben-Konstruktion, selbst bei Schaltstellungen zwischen den Gangschaltstufen immer antriebsbereit zu sein, im vollen Umfang erhalten bleibt.

Ergänzend zum Aufbau gemäß Figur 24 wird noch eine Variante anhand der Figur 24a erläutert. Diese Figur 24a zeigt einen Aufbau, in welchem die beiden Sonnenräder 9 und 10 auf der Nabenachse 5 drehbar, jedoch axial festliegend angeordnet sind.

An der Nabenachse 5 sind zwei axial verschiebbare, für sich drehfeste Kupplungselemente 13 und 13a so angeordnet, daß durch Schalten beispielsweise mittels Schubklötzen 12 und 12a, welche in der Nabenachse axial verschiebbar und miteinander verbunden angeordnet sind, jeweils eines der Sonnenräder 9 bzw. 10 entsprechend der zugeordneten Gangschaltstufe auf der Nabenachse 5 mit einem der Kupplungselemente 13 bzw. 13a festgesetzt werden kann. Die Schaltbetätigung erfolgt dabei nur in einer axialen Richtung.

Figur 24a zeigt den Aufbau in der Schaltstellung 5. Gang. Zur Schaltung 4. Gang wird das Schubklotzsystem 12/12a nach axial rechts gezogen, so daß das Sonnenrad 10 von der Kupplungsfläche 13 freigegeben, das Sonnenrad 9 dagegen mittels der Kupplungsfläche 13a mit der Nabenachse 5 drehfest gekuppelt wird. - Diese Kupplungsstellung besteht auch bei den noch nicht erwähnten Schaltstellungen 3. und 2. Gang. -

Zur Schaltstellung 1. Gang wird das Schubklotzsystem 12/12a in dergleichen axialen Richtung weiterbewegt, derart, daß das Sonnenrad 9 mit seiner Kupplungsfläche 9a vom Kupplungselement 13a freigegeben wird, dagegen das Sonnenrad 10 mit seiner Kupplungsfläche 10a mittels des Kupplungselementes 13a nunmehr gekuppelt wird und damit mit der Nabenachse 5 fest verbunden ist. Das in der dargestellten Gangschaltstellung 5. Gang wirksam gewesene Kupplungselement 13 ist nunmehr axial weit vom Sonnenrad 10 entfernt und hinsichtlich einer Kupplungsverbindung ohne Funktion.

Bei einer Schaltbetätigung in nur einer axialen Richtung ergibt sich in der Funktionsfolge, daß zuerst das große Sonnenrad 10, dann das kleine Sonnenrad 9 und schließlich wieder das große Sonnenrad 10 drehfest gehalten wird. Dies kann einmal dadurch geschehen, daß mittels der erwähnten Schubklotzanordnung das eine oder andere Sonnenrad unmittelbar mit der Nabenachse 5 drehfest verbunden wird, es ist auch möglich, auf der Nabenachse 5 eine sogenannte Schiebehülse 13 drehfest anzuordnen, mit welcher dann die Sonnenräder in der vorstehend geschilderten Funktionsfolge wechselweise drehfest verbunden werden, wodurch sich für das hier nicht gezeigte System von gestuften Planetenrädern die entsprechenden Eingriffsverhältnisse ergeben, mit welchen die unterschiedlichen Gangschaltstufen im Nabengetriebe erzielt werden.

Weiterhin kann es für einen zuverlässigen Kupplungseingriff sehr zweckmäßig sein, wenn die Kupplungsflächen an den Sonnenrädern und an den zum Festsetzen dienenden Kupplungsmitteln nicht mit parallelen Flanken versehen sind, sondern mit hinterschnitten ausgestalteten Kupplungsflächen versehen sind, derart, daß z.B. eine sogenannte Schwalbenschwanzform gebildet wird.

Schließlich kann es bei einer Nabe beispielsweise gemäß Figur 1 für eine günstige Funktion auch vorteilhaft sein, wenn die axial einerseits in ständigem Eingriff in der Innenverzahnung 3b des Antreibers 3 befindliche Kupplungsbuchse 14 an ihrer entsprechenden Verzahnung 14b etwa schraubenförmig ausgestaltet ist, wobei dann auch die Innenverzahnung 3b im Antreiber 3 entsprechend schraubenförmig ausgebildet ist.

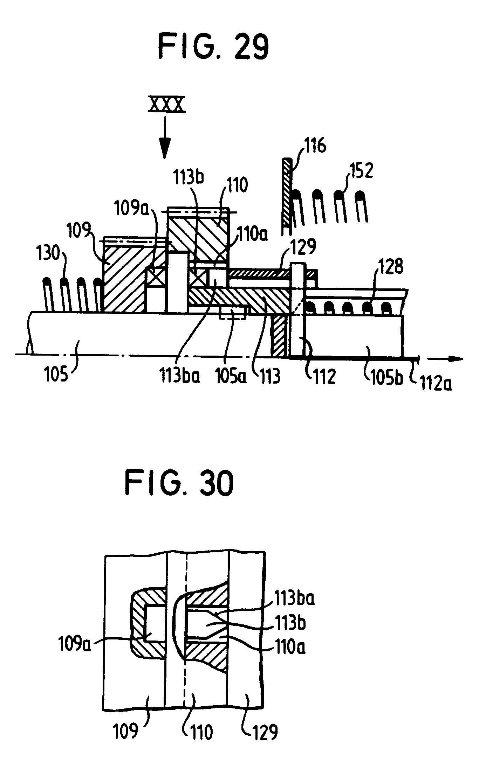

In der Fig. 29 ist in schematischer Darstellung die Ausbildung der Sonnenräder 109 und 110 zusammen mit den Kupplungsmitteln dargestellt, die dazu dienen, um jeweils eines der Sonnenräder 109 und 110 drehfest auf der Nabenachse 105 festzustellen. Eine Ausbildung, wie sie in Fig. 29 dargestellt ist, könnte in der Konstruktion nach Fig. 1 zur Anwendung kommen.

Auch bei der Ausführungsform nach Fig. 29 ist eine Betätigung mittels eines einzigen Schaltzugs 112a von rechts dargestellt. Die Ausbildung des Planetengetriebes und die wahlweise Verbindung der Kupplungsbuchse 14 mit dem Planetenradträger und dem Hohlrad erfolgt genauso wie in Fig. 1 dargestellt.

In Fig. 29 liegen die Sonnenräder 109 und 110 axial aneinander an und sind durch die gegenüber der Druckfeder 128 weichere Druckfeder 130 nach rechts vorgespannt. Fig. 29 entspricht der Stellung des 5. Ganges (großer Schnellgang) und insoweit der Fig. 1. In Fig. 29 ist das Sonnenrad 110 durch seine Innenverzahnung 110a in Eingriff mit den geraden Kupplungsklauen 113b der Schiebehülse 113, während die Schiebehülse 113 durch die Kupplungsklauen 105a drehfest an der Nabenachse 105 festgelegt ist. Das Sonnenrad 109 ist auf der Nabenachse 105 frei drehbar. Wenn von dem in der Fig. 29 dargestellten 5. Gang (großer Schnellgang) auf den 4. Gang (kleiner Schnellgang) umgeschaltet werden soll, so wird mittels des Zugseils 112a der Schubklotz 112 und mit ihm die Zwischenhülse 129 gegen die Wirkung der stärkeren Schraubendruckfeder 128 nach rechts verschoben, so daß unter der Wirkung der Schraubendruckfeder 130 die beiden Sonnenräder 109 und 110 der Zwischenhülse 129 nach rechts folgen können, bis das Sonnenrad 110 an der Scheibe 116 zum Anschlag kommt. Dabei tritt die Innenverzahnung 110a außer Eingriff mit den Kupplungsklauen 113b und die Kupplungsverzahnung 109a tritt in Eingriff mit den Kupplungsklauen 113b. Damit wird erreicht, daß nunmehr das Sonnenrad 109 unverdrehbar über die Schiebehülse 113 an der Nabenachse 105 festgelegt ist, während das Sonnenrad 110 gegenüber der Schiebehülse 113 frei drehbar ist. Sollte sich aufgrund einer Fehleinstellung der Fall ergeben, daß das Sonnenrad 110 nicht bis zum Anschlag 116 verschoben wird und deshalb die Kupplungverzahnung 109a nicht zum Eingriff mit den Kupplungsklauen 113b kommen kann, so befindet sich die Innenverzahnung 110a nunmehr im Eingriff mit den Schrägflächen 113ba der Kupplungsklauen 113b; dies hat zur Folge, daß nunmehr das Sonnenrad 110 bei Drehbewegung infolge Drehens des Planetengetriebes durch die Wechselwirkung der Innenverzahnung 110a mit den Schrägflächen 113ba gegen die Wirkung der Schraubendruckfeder 128 nach rechts verschoben wird, annähernd bis zum Anschlag an der Scheibe 116. Dann kann aber das Sonnenrad 109 unter der Wirkung der Schraubendruckfeder 130 dem Sonnenrad 110 folgen und nunmehr mit Sicherheit in Verbindung mit der Schiebehülse 113 treten, indem die Innenverzahnung 109a zum Eingriff mit den sich axial erstreckenden Teilflächen der Kupplungsklauen 113b gelangt. Somit ist auch bei dieser Ausführungsform dafür gesorgt, daß unter allen Umständen eines der Sonnenräder 109, 110 drehfest an der Schiebehülse 113 und damit drehfest an der Nabenachse 105 festgelegt ist.

Wenn zum Rückschalten von der Stellung des 4. Ganges auf die in Fig. 29 dargestellte Stellung des 5. Ganges das Zugseil 112a nach links losgelassen wird und das Sonnenrad 110 dann durch die Zwischenhülse 129 nicht bis in die ordnungsgemäße Stellung nach links verschoben wird, so kann wieder der Fall eintreten, daß die Innenverzahnung 110a keine ausreichende axiale Überdeckung mit den geraden Abschnitten der Kupplungsklaue 113b besitzt. Sollte dann im Laufe der Zeit durch Verformung der Fall eintreten, daß das Sonnenrad 110 nicht mehr drehfest an den Kupplungsklauen 113b fixiert ist, so kommt die Innenverzahnung 110a wieder in Eingriff mit den Schrägflächen 113ba. Die Folge ist, daß das Sonnenrad 110 wieder nach rechts verschoben wird und nunmehr das Sonnenrad 109 mit seiner Innenverzahnung 109a wieder in Eingriff mit den Kupplungsklauen 113b treten kann. Damit ist auch in dieser Situation wieder gewährleistet, daß in jedem Augenblick eines der Sonnenräder 109, 110 drehfest festgelegt ist und damit wirksames Reaktionsglied des Planetengetriebes sein kann.

Es ist zu bemerken, daß bei der Ausführungsform nach den Fig. 2 bis 9 und 29 die durch die Schrägflächen bewirkte verschiebung eines Sonnenrads bzw. einer Kupplungsklaue immer in solcher Richtung erfolgen muß,
daß der Seilzug entspannt wird, damit nicht der Seilzug überspannt wird. Ersatzweise könnte man sich allerdings vorstellen, daß man in den Seilzug ein elastisches Ausgleichsglied einbaut, welches durch die Verschiebung des Sonnenrads bzw. der Kupplungsklaue gedehnt wird.

Bei der Ausführungsform der Fig. 29 können die Schrägflächen 113ba ihre Schutzfunktion auch dann erfüllen, wenn vom 2. auf den 1. Gang geschaltet wird (siehe Beschreibung der Fig. 1). Die Sonnenräder 109 und 110 stehen dann an der Scheibe 116 an und das Sonnenrad 109 ist mit der Schiebehülse 113 gekuppelt. Wird nun die Schiebehülse 113 infolge des Umschaltens weiter nach rechts gezogen, so gelangen die Kupplungsklauen 113b wieder in Eingriff mit der Innenverzahnung 110a des Sonnenrads 110. Reicht die Verschiebung der Schiebehülse 113 nach rechts nicht aus, um einen ordnungsgemäßen Eingriff der Kupplungsklaue 113b mit der Innenverzahnung 110a herzustellen, so tritt die Innenverzahnung 110a in Eingriff mit den Schrägflächen 113ba und das Sonnenrad 110 wird weiter nach rechts verschoben. Diese weitere Verschiebung des Sonnenrads 110 nach rechts wird dadurch möglich, daß die Scheibe 116 durch eine Schraubendruckfeder 152 abgestützt ist und im notwendigen Maße nach rechts ausweichen kann. Dann kommt wieder die Innenverzahnung 109a des Sonnenrades 109 zum Eingriff mit den geraden Abschnitten der Kupplungsklauen 113b, so daß dann das Sonnenrad 109 wieder im Rahmen des Planetengetriebes die Sonnenradfunktion erfüllen kann.

## Patentansprüche

1. Mehrganggetriebenabe mit mehr als 3 Gängen, insbesondere mit 5 Gängen, und -gewünschtenfalls- mit Rücktrittbremse für Fahrräder oder dergleichen, umfassend
eine Nabenachse (5), welche eine geometrische Achse besitzt,
einen Antreiber (3), welcher drehbar auf der Nabenachse (5) gelagert ist, wobei dieser Antreiber (3) dazu ausgebildet ist, um mit mindestens einem Kettenzahnkranz (3′) ausgerüstet zu werden,
eine Nabenhülse (1), welche drehbar auf der Nabenachse (5) gelagert ist,
ein Planetengetriebesystem innerhalb der Nabenhülse (1), wobei dieses Planetengetriebesystem aufweist:
einen axial feststehenden Planetenradträger (6), welcher auf der Nabenachse (5) drehbar gelagert ist,
mindestens ein axial feststehendes Planetenrad (8), welches drehbar auf dem Planetenradträger (6) gelagert ist, wobei dieses Planetenrad (8) mit einem großen Stufenplanetenrad (8a) und einem kleinen Stufenplanetenrad (8b) ausgeführt ist,
Sonnenräder (9,10), nämlich ein kleines Sonnenrad (9) zum kämmenden Eingriff mit dem großen Stufenplanetenrad (8a) und ein großes Sonnenrad (10) zum kämmenden Eingriff mit dem kleinen Stufenplanetenrad (8b), wobei diese Sonnenräder (9,10) selektiv gegen Drehung um die Nabenachse (5) sperrbar sind,
ein Hohlrad (11), welches drehbar um die Nabenachse (5) gelagert ist,
wobei das Hohlrad (11) in kämmendem Eingriff mit einem der Stufenplanetenräder (8a,8b) steht,
und ferner umfassend
ein axial verschiebbares Kupplungselement (14), insbesondere in Form einer Kupplungsbuchse (14), welches in ständigem drehfestern Eingriff mit dem Antreiber (3) steht und durch axiale Verschiebung diesen selektiv zur Kupplung bringt mit entweder dem Planetenradträger (6) oder dem Hohlrad (11), um gemeinsam mit dem jeweiligen Teil (6 bzw. 11) um die Nabenachse (5) zu rotieren,
ein erstes Freilaufgesperre (Antriebssperrklinke 19 - Innengesperre 1b) zwischen dem Hohlrad (11) und der Nabenhülse (1),
ein zweites Freilaufgesperre (Antriebssperrklinke 18 - Innengesperre 1a) zwischen dem Planetenradträger (6) und der Nabenhülse (1) und
Gangsteuerungsmittel (Zugstange 12a - Zugkette 12b - Anschlußteil 12c), welche durch eine Bohrung (5c) der Nabenachse (5) in das Nabeninnere hereingeführt sind und welche dazu bestimmt und geeignet sind, um durch einen Schlitz (5b) der Nabenachse (5) hindurch selektiv das eine oder andere der Sonnenräder (9,10) gegen die Drehung um die Nabenachse (5) zu sperren, um selektiv den Antreiber (3) mit dem Planetenradträger (6) und dem Hohlrad (11) zu kuppeln und um das erste Freilaufgesperre (19, 1b) zu inaktivieren,
dadurch gekennzeichnet,
daß jedes der Sonnenräder (9,10) gegen Drehung um die Nabenachse (5) durch mindestens eine Kupplungszahn-Kupplungsausnehmungskombination (5a,9a;5a,10a) sperrbar ist mit einem auf der Nabenachse (5) drehfest angeordneten Kupplungszahn (5a) und einer an dem jeweiligen Sonnenrad (9,10) angeordneten Kupplungsausnehmung (9a, 10a) , daß die Sperrung und die Drehungsfreigabe des jeweiligen Sonnenrads (9,10) durch axiale Relativbewegung des jeweiligen Kupplungszahnes (5a) und der jeweiligen Kupplungsausnehmung (9a,10a) erfolgt, indem der jeweilige Kupplungszahn (5a) in die jeweilige Kupplungsausnehmung (9a,10a) eintritt bzw. aus dieser austritt, daß sowohl der Kupplungszahn (5a) als auch die Kupplungsausnehmung (9a,10a) der Kupplungszahn-Kupplungsausnehmungskombinationen (5a,9a;5a,10a) eines jeden Sonnenrads (9,10) jeweils ein Paar im wesentlichen achsparalleler Kupplungsflanken umfaßt, daß einer von den Teilen: Kupplungszahn (5a), Kupplungsausnehmung (9a) einer Kupplungszahn-Kupplungsausnehmungskombination (5a, 9a) eines Sonnenrads (9) mindestens eine Einweiseflanke (9b) axial angrenzend an eine zugehörige Kupplungsflanke umfaßt derart, daß durch Relativdrehung des Kupplungszahns (5a) und der Kupplungsausnehmung (9a) der Kupplungszahn-Kupplungsausnehmungskombination (5a,9a) des einen Sonnenrads (9) bei peripherem Gegenüberstehen der Einweiseflanke (9b) des einen (9a) der Teile: Kupplungszahn (5a) und Kupplungsausnehmung (9a) gegenüber dem jeweils anderen (5a) dieser Teile eine axiale Relativverschiebung von Kupplungszahn (5a) und Kupplungsausnehmung (9a) der Kupplungszahn-Kupplungsausnehmungskombination (5a,9a) des einen Sonnenrads (9) in Richtung auf Eingriffslösung dieses Kupplungszahns (5a) und dieser Kupplungsausnehmung (9a) stattfindet und daß diese axiale Relativverschiebung eine axiale Folgerelativverschiebung des Kupplungszahns (5a) und der Kupplungsausnehmung (10a) der Kupplungszahn-Kupplungsausnehmungskombination (5a,10a) des anderen Sonnenrads (10) in Richtung auf Eingriffsherstellung der Kupplungsflanken des Kupplungszahns (5a) und der Kupplungsausnehmung (10a) der Kupplungszahn-Kupplungsausnehmungskombination (5a,10a) des anderen Sonnenrads (10) veranlaßt.

2. Mehrganggetriebenabe nach Anspruch 1,
dadurch gekennzeichnet,
daß einer von den Teilen: Kupplungszahn (5a), Kupplungsausnehmung (9a) einer Kupplungszahn-Kupplungsausnehmungskombination (5a,9a) eines Sonnenrads (9) eine Einweiseflanke (9b) axial angrenzend an das jeweils zugehörige Paar von Kupplungsflanken umfaßt, und daß die einzelnen Einweiseflanken (9b) des genannten Paars von Einweiseflanken (9b) gegenüber einer zur Achse parallelen und durch den peripheren Mittelpunkt des jeweils zugehörigen Teils: Kupplungszahn (5a), Kupplungsausnehmung (9a) gelegten Bezugslinie in entgegengesetzter Richtung geneigt sind.

3. Mehrganggetriebenabe nach Anspruch 1 oder 2,
dadurch gekennzeichnet,
daß der axialen Relativverschiebung des Kupplungszahns (5a) und der Kupplungsausnehmung (9a) der besagten Kupplungszahn-Kupplungsausnehmungskombination (5a, 9a) des einen Sonnenrads (9) eine erste Federung (Feder 30) entgegenwirkt, und daß die axiale Folgerelativverschiebung des Kupplungszahns (5a) und der Kupplungsausnehmung (10a) der Kupplungszahn-Kupplungsausnehmungskombination (5a,10a) des anderen Sonnenrads (10) durch eine zweite Federung (Feder 50) bewirkt wird.

4. Mehrganggetriebenabe nach einem der Ansprüche 1 - 3,
dadurch gekennzeichnet,
daß die Kupplungszahn-Kupplungsausnehmungskombination (5a,9a) eines ersten (9) der sonnenräder (9,10) und die Kupplungszahn-Kupplungsausnehmungskombination (5a, 10a) eines zweiten (10) der Sonnenräder (9,10) einen gemeinsamen Kupplungszahn (5a) für jede der beiden Kombinationen und je eine Ausnehmung (9a,10a) in jedem der beiden Sonnenräder (9,10) umfaßt.

5. Mehrganggetriebenabe nach einem der Ansprüche 1 - 3, dadurch gekennzeichnet, daß die Kupplungszahn-Kupplungsausnehmungskombination (5a,9a) eines ersten Sonnenrads (9) einen ersten Kupplungszahn (5a) und eine erste Kupplungsausnehmung (9a) für das erste Sonnenrad (9) umfaßt und daß die Kupplungszahn-Kupplungsausnehmungskombination (5a′, 10a′) des zweiten Sonnenrads (10) einen zweiten Kupplungszahn (5a′) und eine zweite Kupplungsausnehmung (10a′) für das zweite Sonnenrad (10) umfaßt.

6. Mehrganggetriebenabe nach Anspruch 4,
dadurch gekennzeichnet,
daß der gemeinsame Kupplungszahn (5a) axial fest bezüglich der Nabenachse (5) angeordnet ist, und daß die Sonnenräder (9,10) axial beweglich gegenüber der Nabenachse (5) sind.

7. Mehrganggetriebenabe nach Anspruch 4,
dadurch gekennzeichnet,
daß der gemeinsame Kupplungszahn (5a′) axial beweglich gegenüber der Nabenachse (5), und daß die Sonnenräder (9,10) axial fest gegenüber der Nabenachse (5) sind.

8. Mehrganggetriebenabe nach einem der Ansprüche 1 - 7,
dadurch gekennzeichnet,
daß die Einweiseflanken (9b) Teile der jeweiligen Kupplungsausnehmung (9a) sind.

9. Mehrganggetriebenabe nach einem der Ansprüche 1 - 7,
dadurch gekennzeichnet,
daß die Einweiseflanken (5b) Teile des jeweiligen Kupplungszahns (5a) sind.

10. Mehrganggetriebenabe nach einem der Ansprüche 1 - 9,
dadurch gekennzeichnet,
daß der Kupplungszahn (5a) mindestens einer der Kupplungszahn-Kupplungsausnehmungskombinationen (5a,9a) einstückig mit der Nabenachse (5) hergestellt ist.

11. Mehrganggetriebenabe nach einem der Anspruche 1-5 und 7-9,
dadurch gekennzeichnet,
daß der Kupplungszahn (5a′) mindestens einer der Kupplungszahn-Kupplungsausnehmungskombinationen (5a′,9a) ein Teil mindestens eines Schubklotzes ist.

12. Mehrganggetriebenabe nach Anspruch 7,
dadurch gekennzeichnet,
daß der Kupplungszahn (13a) mindestens einer der Kupplungszahn-Kupplungsausnehmungskombinationen (13a,9a;13a,10a) auf einer Schiebehülse (13) angeordnet ist, welche axial beweglich ist und unverdrehbar auf der Nabenachse (5) angebracht ist.

13. Mehrganggetriebenabe nach Anspruch 5,
dadurch gekennzeichnet, daß eine Trennfederung (Druckfeder 51) zwischen den beiden Sonnenrädern (9,10) vorgesehen ist, daß die beiden Sonnenräder (9,10) gegenüber der Nabenachse (5) axial beweglich sind, und daß die Kupplungszähne (5a, 5a′) der Kupplungszahn-Kupplungsausnehmungskombination (5a,9a;5a′,10a) gegenüber der Nabenachse (5) axial fest sind.

14. Mehrganggetriebenabe nach einem der Ansprüche 1 - 13,
dadurch gekennzeichnet,
daß die Gangsteuerungsmittel zwei Gangsteuerungselemente (12b,12b′) umfassen, welche von beiden Enden der Nabenachse (5) her in entsprechende Bohrungen der Nabenachse (5) eingeführt sind, daß ein erstes (12b) dieser Gangsteuerungselemente dazu bestimmt und geeignet ist, um den Antreiber (3) wahlweise mit dem Planetenradträger (6) und dem Hohlrad (11) zu kuppeln und das erste Freilaufgesperre (19,1b) zu inaktivieren, und daß das zweite Gangsteuerungselement (12b′) dazubestimmt und geeignet ist, um nach Wahl das eine oder das andere der Sonnenräder (9,10) gegen Drehung um die Nabenachse (5) zu sperren.

15. Mehrganggetriebenabe nach einem der Ansprüche 1 - 14, dadurch gekennzeichnet, daß die Nabenhülse (1) einen ersten Axialabschnitt von größerem Durchmesser und einen zweiten Axialabschnitt von kleinerem Durchmesser besitzt, daß der erste Axialabschnitt das Planetengetriebesystem aufnimmt und daß der zweite Axialabschnitt die Rücktrittbremse aufnimmt.

16. Mehrganggetriebenabe nach einem der Ansprüche 1 - 15,
dadurch gekennzeichnet,
daß die Rücktrittbremse einen Bremskonus (17) und einen spreizbaren Bremsmantel (24) umfaßt, daß der spreizbare Bremsmantel drehfest an der Nabenachse (5) festgelegt ist, daß der Bremskonus (17) auf dem Planetenradträger (6) durch eine Gewindeanordnung (6a) angebracht und gegen Drehung durch eine Friktionsfeder (20) gesichert ist, wobei eine Rückwärtsverdrehung des Planetenradträgers (6) unter Vermittlung der Gewindeanordnung (6a) eine Axialbewegung des Bremskonus (17) bewirkt und wobei diese Axialbewegung des Bremskonus (17) eine Spreizung des Bremsmantels (24) zum bremsenden Eingriff mit der Nabenhülse (1) bewirkt.

17. Mehrganggetriebenabe nach einem der Ansprüche 1 - 16, dadurch gekennzeichnet, daß sie als 5-Ganggetriebenabe aus gebildet ist, wobei in einem 5. Schaltzustand das kleine Sonnenrad (9) frei zur Drehung um die Nabenachse (5) ist, das große Sonnenrad (10) gegen Drehung um die Nabenachse (5) gesperrt ist, der Antreiber (3) in drehmomentübertragendem Eingriff mit dem Planetenradträger steht und das erste Freilaufgesperre (19) aktiv ist,
wobei in einem 4. Schaltzustand das kleine Sonnenrad (9) gegen Drehung um die Nabenachse (5) gesperrt ist, das große Sonnenrad (10) frei um die Nabenachse (5) drehbar ist, der Antreiber (3) noch in drehmomentübertragendem Eingriff mit dem Planetenradträger steht und das erste Freilaufgesperre (19) noch aktiv ist,
wobei in einem 3. Schaltzustand das kleine Sonnenrad (9) gegen Drehung um die Nabenachse (5) gesperrt ist, das große Sonnenrad (10) um die Nabenachse (5) frei drehbar ist, der Antreiber (3) in drehmomentübertragendem Eingriff mit dem Hohlrad (11) ist und das erste Freilaufgesperre (19) noch aktiv ist,
wobei in einem 2. Schaltzustand das kleine Sonnenrad (9) gegen Drehung um die Nabenachse (5) gesperrt ist, das große Sonnenrad (10) frei um die Nabenachse (5) drehbar ist, der Antreiber (3) in drehmomentübertragender Verbindung mit dem Hohlrad (11) steht und das erste Freilaufgesperre (19) inaktiviert ist, und
wobei in einem 1. Schaltzustand das kleine Sonnenrad (9) frei drehbar um die Nabenachse (5) ist, das große Sonnenrad (10) gegen Drehung um die Nabenachse (5) gesperrt ist, der Antreiber (3) in drehmomentübertragendem Eingriff mit dem Hohlrad (11) steht und das erste Freilaufgesperre (19) inaktiviert ist.

18. Mehrganggetriebenabe nach Anspruch 17,
dadurch gekennzeichnet,
daß die beiden Sonnenräder (9 und 10) durch eine Feder (30) gegen einen mit einem zugehörigen Gangsteuerungsorgan (12b′) verbundenen Schubklotz in eine Stellung vorgespannt sind, in welcher eines (9) der Sonnenräder (9 und 10) in Eingriff mit einem nabenachsenfesten Kupplungselement (5a) steht, und daß bei Verschieben dieses Schubklotzes die Feder (30) das eine Sonnenrad (9) außer Eingriff und das andere Sonnenrad (10) in Eingriff mit dem nabenachsenfesten Kupplungselement (5a) verschiebt.

19. Mehrganggetriebenabe nach Anspruch 18,
dadurch gekennzeichnet,
daß zwischen den beiden Sonnenrädern (9,10) Anschlagmittel (53) vorgesehen sind.

20. Mehrganggetriebenabe nach einem der Ansprüche 18 und 19,
dadurch gekennzeichnet,
daß das kleine Sonnenrad (9) antreiberfern und das große Sonnenrad (10) antreibernahe angeordnet sind, daß die beiden Sonnenräder (9,10) durch die Feder (30) in Richtung auf Eingriff des kleinen Sonnenrads (9) mit dem nabenachsenfesten Kupplungselement (5a) vorgespannt sind,
daß ein den Sonnenrädern zugeordnetes Gangsteuerungsorgan (12b′) von dem antreiberfernen Ende der Nabenachse (5) her in diese eingeführt ist, und daß durch Ziehen dieses Gangsteuerungsorgans (12b′) die Sonnenräder (9,10) gemeinsam gegen die Wirkung der Feder (30) in Stellungen verschiebbar sind, in welchen das große Sonnenrad (10) in Eingriff mit dem achsfesten Kupplungselement (5a) steht und das kleine Sonnenrad (9) außer Eingriff mit diesem Kupplungselement (5a) steht.

21. Mehrganggetriebenabe nach einem der Ansprüche 17 - 20,
dadurch gekennzeichnet,
daß ein dem antreiberseitigen Kupplungselement (Kupplungsbuchse 14) zugeordnetes Gangsteuerungsorgan (12b) von dem antreiberseitigen Nabenachsenende her in die Nabenachse (5) eingeführt ist, daß das Kupplungselement (Kupplungsbuchse 14) durch eine Federung (Druckfeder 28) in Richtung auf Eingriff mit dem Planetenradträger vorgespannt ist, daß der antreiber (3) durch Ziehen des zugehörigen Gangsteuerungsorgans (12b) aus dem Eingriff mit dem Planetenradträger trennbar und zum Eingriff mit dem Hohlrad (11) bringbar ist, und daß durch weiteres Ziehen dieses Gangsteuerungsorgans (12b) das 1. Freilaufgesperre (19) inaktivierbar ist.

22. Sonnenradfeststelleinrichtung bei einer Mehrganggetriebenabe mit mehr als 3 Gängen und - gewünschtenfalls - mit einer Rücktrittbremse für Fahrräder oder dergleichen, insbesondere bei einer 5-Ganggetriebenabe nach einem der Ansprüche 1-21, bei welcher Nehrganggetriebenabe ein Planetengetriebesystem innerhalb einer Nabenhülse (1) aufweist:
einen axial feststehenden Planetenradträger (6), welcher auf einer Nabenachse (5) drehbar gelagert ist,
mindestens ein axial feststehendes Planetenrad (8), welches drehbar auf dem Planetenradträger (6) gelagert ist, wobei dieses Planetenrad (8) mit einem großen Stufenplanetenrad (8a) und einem kleinen Stufenplanetenrad (8b) ausgeführt ist,
Sonnenräder (9,10), nämlich ein kleines Sonnenrad (9) zum kämmenden Eingriff mit dem großen Stufenplanetenrad (8a) und ein großes Sonnenrad (10) zum kämmenden Eingriff mit dem kleinen Stufenplanetenrad (8b),
Gangsteuerungsmittel, welche durch eine Bohrung (5c) der Nabenachse (5) in das Nabeninnere hereingeführt sind und welche dazu bestimmt und geeignet sind, um durch einem Schlitz (5b) der Nabenachse (5) hindurch selektiv die Sperrung des einen oder anderen der Sonnenräder (9,10) gegen Drehung um die Nabenachse (5) zu steuern,
und ein Hohlrad (11), welches drehbar um die Nabenachse (5) gelagert ist und in kämmendem Eingriff mit dem Planetenrad (8) steht,
dadurch gekennzeichnet,
daß jedes der Sonnenräder (9,10) gegen Drehung um die Nabenachse (5) durch mindestens eine Kupplungszahn-Kupplungsausnehmungskombination (5a, 9a;5a,10a) sperrbar ist mit einem auf der Nabenachse (5) drehfest angeordneten Kupplungszahn (5a) und einer an dem jeweiligen Sonnenrad (9,10) angeordneten Kupplungsausnehmung (9a,10a), daß die Sperrung und die Drehungsfreigabe des jeweiligen Sonnenrads (9,10) durch axiale Relativbewegung des jeweiligen Kupplungszahnes (5a) und der jeweiligen Kupplungsausnehmung (9a,10a) erfolgt, indem der jeweilige Kupplungszahn (5a) in die jeweilige Kupplungsausnehmung (9a,10a) eintritt bzw. aus dieser austritt, daß sowohl der Kupplungszahn (5a) als auch die Kupplungsausnehmung (9a,10a) der Kupplungszahn-Kupplungsausnehmungskombinationen (5a,9a;5a,10a) eines jeden Sonnenrads (9,10) jeweils ein Paar im wesentlichen achsparalleler Kupplungsflanken umfaßt, daß einer von den Teilen: Kupplungszahn (5a), Kupplungsausnehmung (9a) einer Kupplungszahn-Kupplungsausnehmungskombination (5a,9a) eines Sonnenrads (9) mindestens eine Einweiseflanke (9b) axial angrenzend an eine zugehörige Kupplungsflanke umfaßt derart, daß durch Relativdrehung des Kupplungszahns (5a) und der Kupplungsausnehmung (9a) der Kupplungszahn-Kupplungsausnehmungskombination (5a,9a) des einen Sonnenrads (9) bei peripherem Gegenüberstehen der Einweiseflanke (9b) des einen (9a) der Teile: Kupplungszahn (5a) und Kupplungsausnehmung (9a) gegenüber dem jeweils anderen (5a) dieser Teile eine axiale Relativverschiebung von Kupplungszahn (5a) und Kupplungsausnehmung (9a) der Kupplungszahn-Kupplungsausnehmungskombination (5a,9a) des einen Sonnenrads (9) in Richtung auf Eingriffslösung dieses Kupplungszahns (5a) und dieser Kupplungsausnehmung (9a) stattfindet und daß diese axiale Relativverschiebung eine axiale Folgerelativverschiebung des Kupplungszahns (5a) und der Kupplungsausnehmung (10a) der Kupplungszahn-Kupplungsausnehmungskombination (5a,10a) des anderen Sonnenrads (10) in Richtung auf Eingriffsherstellung der Kupplungsflanken des Kupplungszahns (5a) und der Kupplungsausnehmung (10a) der Kupplungszahn-Kupplungsausnehmungskombination (5a,10a) des anderen Sonnenrads (10) veranlaßt.

## Claims

1. A multi-speed gear hub with more than three speeds, in particular with five speeds and, if required, with a back pedal brake, for bicycles or the like, comprising
a hub axle (5) having a geometrical axis,
a driving member (3) rotatably mounted on the hub axle (5), said driving member (3) being constructed in order to be equipped with at least one chain wheel (3′),
a hub sleeve (1) rotatably mounted on the hub axle (5), a planetary gear system inside the hub sleeve (1), said planetary gear system comprising:
an axially fixed planet carrier (6) which is rotatably mounted on the hub axle (5),
at least one axially fixed planet wheel (8) which is rotatably mounted on the planet carrier (6), said planet wheel (8) being constructed with a large stepped planet wheel (8a) and a small stepped planet wheel (8b),
sun wheels (9, 10), namely a small sun wheel (9) for meshing engagement with the large stepped planet wheel (8a) and a large sun wheel (10) for meshing engagement with the small stepped planet wheel (8b), whereby these sun wheel (9, 10) can be selectively blocked against rotation about the hub axle (5),
a hollow wheel (11) mounted to rotate about the hub axle (5), the hollow wheel (11) being in meshing engagement with one of the stepped planet wheels (8a,8b), and further comprising:
an axially displaceable coupling element (14), particularly in the form of a coupling bush (14) which coupling element is in constant rotationally rigid engagement with the driving member (3) and, by axial displacement, causes this latter to be coupled with either the planet carrier (6) or the hollow wheel (11) in order to rotate about the hub axle (5) jointly with the respective part (6 or 11),
a first free wheel locking mechanism (drive pawl 19 - internal ratchet 1b) between the hollow wheel (11) and the hub sleeve (1),
a second free wheel locking mechanism (drive pawl 18 - internal ratchet 1a) between the planet carrier (6) and the hub sleeve (1) and
gear control means (tie rod 12a - pulling chain 12b - connection part 12c) which are passed through a bore (5c) in the hub axle (5) and into the hub interior and which are intended and suitable for selectively blocking one or other of the sun wheels (9, 10) against rotation about the hub axle (5) selectively through a slot (5b) in the hub axle (5), in order selectively to couple the driving member (3) with the planet carrier (6) and the hollow wheel (11), and in order to inactivate the first free wheel locking mechanism (19, 1b),
characterised in that
each of the sun wheels (9, 10) can be blocked against rotation about the hub axle (5) by at least one coupling tooth-coupling recess combination (5a, 9a; 5a, 10a), with a coupling tooth (5a) rotationally rigid on the hub axle (5) and a coupling recess (9a, 10a) disposed on the respective sun wheel (9, 10), and in that the blocking and release for rotation of the respective sun wheel (9, 10) takes place by an axial relative movement of the respective coupling tooth (5a) and of the respective coupling recess (9a, 10a) with the respective coupling tooth (5a) entering or emerging from, respectively, the respective coupling recess (9a, 10a), and in that both the coupling tooth (5a) and also the coupling recess (9a, 10a) of the coupling tooth-coupling recess combinations (5a, 9a; 5a, 10a) of each sun wheel (9, 10) comprises a pair of substantially axially parallel coupling flanks, and in that a member of the group: coupling tooth (5a) and coupling recess (9a) of a coupling tooth-coupling recess combination (5a, 9a) of a sun wheel (9) comprises at least one guide-in flank (9b) axially adjacent an associated coupling flank so that by relative rotation of the coupling tooth (5a) and of the coupling recess (9a) of the coupling tooth-coupling recess combination (5a, 9a) of said sun wheel (9) with peripheral juxtaposition of the guide-in flank (9b) of said member (9a) of the group: coupling tooth (5a) and coupling recess (9a) with respect to the respectively other member (5a) of said group an axial relative displacement of the coupling tooth (5a) and the coupling recess (9a) of the coupling tooth-coupling recess combination (5a,9a) of said sun wheel (9) takes place in the direction of releasing the engagement of this coupling tooth (5a) and of this coupling recess (9a), and in that this axial relative displacement causes an axial consequential relative displacement of the coupling tooth (5a) and of the coupling recess (10a) of the coupling tooth-coupling recess combination (5a, 10a) of the other sun wheel (10) in the direction of establishing engagement of the coupling flanks of the coupling tooth (5a) and of the coupling recess (10a) of the coupling tooth-coupling recess combination (5a, 10a) of the other sun wheel (10).

2. A multi-speed gear hub according to Claim 1, characterised in that a member of the group: coupling tooth (5a), coupling recess (9a) of a coupling tooth-coupling recess combination (5a, 9a) of a sun wheel (9) has a guide-in flank (9b) axially adjacent the respectively associated pair of coupling flanks, and in that the individual guide-in flanks (9b) of the said pair of guide-in flanks (9b) are inclined in the opposite direction in relation to a reference line parallel with the axis and passing through the peripheral central point of the respectively associated member: coupling tooth (5a), coupling recess (9a).

3. A multi-speed gear hub according to Claim 1 or 2, characterised in that the axial relative displacement of the coupling tooth (5a) and of the coupling recess (9a) of the said coupling tooth-coupling recess combination (5a, 9a) of said sun wheel (9) is counteracted by a first spring arrangement (spring 30), and in that the axial consequential relative displacement of the coupling tooth (5a) and of the coupling recess (10a) of the coupling tooth-coupling recess combination (5a, 10a) of the other sun wheel (10) is caused by a second spring arrangement (spring 50).

4. A multi-speed gear hub according to one of Claims 1 to 3, characterised in that the coupling tooth-coupling recess combination (5a, 9a) of a first (9) of the sun wheels (9, 10) and the coupling tooth-coupling recess (5a, 10a) of a second (10) of the sun wheels (9, 10) comprise a common coupling tooth (5a) for each of the two combinations and a respective recess (9a, 10a) in each of the two sun wheels (9, 10).

5. A multi-speed gear hub according to one of Claims 1 to 3, characterised in that the coupling tooth-coupling recess combination (5a, 9a) of a first sun wheel (9) comprises a first coupling tooth (5a) and a first coupling recess (9a) for the first sun wheel, and in that the coupling tooth-coupling recess combination (5a′, 10a′) of the second sun wheel (10) comprises a second coupling tooth (5a′) and a second coupling recess (10a′) for the second sun wheel (10).

6. A multi-speed gear hub according to Claim 4, characterised in that the common coupling tooth (5a) is axially rigid in respect of the hub axle (5), and in that the sun wheels (9, 10) are axially movable in relation to the hub axle (5).

7. A multi-speed gear hub according to Claim 4, characterised in that the common coupling tooth (5a′) is axially movable in relation to the hub axle (5), and in that the sun wheels (9, 10) are axially rigid in respect of the hub axle (5).

8. A multi-speed gear hub according to one of Claims 1 to 7, characterised in that the guide-in flanks (9b) are parts of the respective coupling recess (9a).

9. A multi-speed gear hub according to one of Claims 1 to 7, characterised in that the guide-in flanks (5b) are parts of the respective coupling tooth (5a).

10. A multi-speed gear hub according to one of Claims 1 to 9, characterised in that the coupling tooth (5a) of at least one of the coupling tooth-coupling recess combinations (5a, 9a) is produced integrally with the hub axle (5).

11. A multi-speed gear hub according to one of Claims 1 to 5 and 7 to 9, characterised in that the coupling tooth (5a′) of at least one of the coupling tooth-coupling recess combinations (5a′, 9a) is a part of at least one thrust block.

12. A multi-speed gear hub according to Claim 7, characterised in that the coupling tooth (13a) of at least one of the coupling tooth-coupling recess combinations (13a, 9a; 13a, 10a) is disposed on a sliding sleeve (13) adapted for axial movement and non-rotatably mounted on the hub axle (5).

13. A multi-speed gear hub according to Claim 5, characterised in that a separating spring arrangement (thrust spring 51) is provided between the two sun wheels (9, 10), and in that the two sun wheels (9, 10) are axially movable in relation to the hub axle (5), and in that the coupling teeth (5a, 5a′) of the coupling tooth-coupling recess combination (5a, 9a; 5a′, 10a) are axially rigid in relation to the hub axle (5).

14. A multi-speed gear hub according to one of Claims 1 to 13, characterised in that the gear control means comprise two gear control elements (12b, 12b′) which are introduced from both ends of the hub axle (5) into corresponding bores in the hub axle (5), and in that a first (12b) of these gear control elements is intended and suitable for coupling the driving member (3) optionally to the planet carrier (6) and the hollow wheel (11) and inactivating the first free wheel locking mechanism (19, 1b), and in that the second gear control element (12b′) is intended and suitable for blocking one or other of the sun wheels (9, 10), as selected, against rotation about the hub axle (5).

15. A multi-speed gear hub according to one of Claims 1 to 14, characterised in that the hub sleeve (1) has a first axial portion of a larger diameter and a second axial portion of a smaller diameter, and in that the first axial portion accommodates the planetary gear system, and in that the second axial gear portion accommodates the back pedal brake.

16. A multi-speed gear hub according to one of Claims 1 to 15, characterised in that the back pedal brake comprises a brake cone (17) and an expandable brake shell (24), and in that the expandable brake shell is rotationally rigid on the hub axial (5), and in that the brake cone (17) is mounted on the planet carrier (6) by a screw threaded arrangement (6a) and is secured against rotation by a friction spring (20), whereby a reverse rotation of the planet carrier (6), through the screw thread arrangement (6a) produces an axial movement of the brake cone (17), this axial movement of the brake cone (17) causing an expansion of the brake shell (24) for braking engagement with the hub sleeve (1).

17. A multi-speed gear hub according to one of Claims 1 to 16, characterised in that it is constructed as a five speed gear hub whereby in a fifth gear condition the small sun wheel (9) is free to rotate about the hub axle (5), the large sun wheel (10) is blocked against rotation about the hub axle (5), the driving member (3) is in a torque-transmitting engagement with the planet carrier and the first free wheel locking mechanism (19) is active, whereby in a fourth gear condition the small sun wheel (9) is blocked against rotation about the hub axle (5), the large sun wheel (10) is freely rotatable about the hub axle (5), the driving member (3) is still in torque-transmitting engagement with the planet carrier and the first free wheel locking mechanism (19) is still active, whereby in a third gear condition the small sun wheel (9) is blocked against rotation about the hub axle (5), the large sun wheel (10) is freely rotatable about the hub axle (5), the driving member (3) is in torque-transmitting engagement with the hollow wheel (11) and the first free wheel locking mechanism (19) is still active, whereby in a second gear condition the small sun wheel (9) is blocked against rotation about a hub axle (5), the large sun wheel (10) is freely rotatable about the hub axle (5), the driving member (3) is in torque-transmitting connection with the hollow wheel (11) and the first free wheel locking mechanism (19) is inactivated, and whereby in a first gear condition the small sun wheel (9) is freely rotatable about the hub axle (5), the large sun wheel (10) is blocked against rotation about the hub axle (5), the driving member (3) is in torque-transmitting engagement with the hollow wheel (11) and the first free wheel locking mechanism (19) is inactivated.

18. A multi-speed gear hub according to Claim 17, characterised in that the two sun wheel (9 and 10) are pretensioned by a spring (30) against a thrust block connected to an associated gear control member (12b′) into a position in which one (9) of the sun wheels (9 and 10) is engaged with a coupling element (5a) rigid with the hub axle, and in that upon displacement of this thrust block the spring (30) displaces the one sun wheel (9) so that it is disengaged from and the other sun wheel (10) so that it is brought into engagement with the coupling element (5a) rigid with the hub axle.

19. A multi-speed gear hub according to Claim 18, characterised in that abutment means (53) are provided between the two sun wheels (9, 10).

20. A multi-speed gear hub according to one of Claims 18 and 19, characterised in that the small sun wheel (9) is remote from the driving member while the large sun wheel (10) is close to the driving member, and in that the two sun wheels (9, 10) are pretensioned by the spring (30) in a direction of engagement of the small sun wheel (9) with the coupling element (5a) rigid with the hub axle, and in that a gear control member (12b′) associated with the sun wheels is inserted into the hub axle (5) from the end remote from the driving member, and in that by pulling this gear control member (12b′) the sun wheels (9, 10) are jointly displaceable against the action of the springs (30) into positions in which the large sun wheel (10) is engaged with the coupling element (5a) rigid with the axle and the small sun wheel (9) is disengaged from this coupling element (5a).

21. A multi-speed gear hub according to one of Claims 17 to 20, characterised in that a gear control member (12b) associated with the coupling element on the driving member side (coupling bush 14) is introduced into the hub axle (5) from that end of the hub axle which is towards the driving member, and in that the coupling element (coupling bush 14) is pretensioned by a spring arrangement (thrust spring 28) in the direction of engagement with the planet carrier, and in that the driving member (3) can be separated from engagement with the planet carrier by pulling the associated gear control member (12b) and can be brought into engagement with the hollow wheel (11) and in that by continued drawing on this gear control member (12b), the first free wheel locking mechanism (19) can be inactivated.

22. A sun wheel blocking means in a multi-speed gear hub having more than three speeds and, if desired, having a back pedal brake for bicycles or the like, particularly in the case of a five-speed gear hub according to one of Claims 1 to 21, in which multi-speed gear hub a planetary gear system has within a hub sleeve (1):
an axially fixed planet carrier (6) which is mounted to rotate on a hub axle (5),
at least one axially fixed planet wheel (8) which is rotatably mounted on the planet carrier (6), said planet wheel (8) being constructed with a large stepped planet wheel (8a) and a small stepped planet wheel (8b),
sun wheels (9, 10), namely a small sun wheel (9) for meshing engagement with the large stepped planet wheel (8a) and a large sun wheel (10) for meshing engagement with the small stepped planet wheel (8b),
gear control means extending through a bore (5c) in the hub axle (5) and into the interior of the hub and which is intended and suitable for controlling selectively the blocking of one or other of the sun wheels (9,10) against rotation about the hub axle (5) through a slot (5b) in the hub axle (5),
and a hollow wheel (11) which is mounted to rotate about the hub axle (5) and is in meshing engagement with the planet wheel (8),
characterised in that each of the sun wheels (9, 10) can be blocked against rotation about the hub axle (5) by at least one coupling tooth-coupling recess combination (5a, 9a; 5a, 10a), with a coupling tooth (5a) rotationally rigid on the hub axle (5) and a coupling recess (9a, 10a) disposed on the respective sun wheel (9, 10), and in that the blocking and release for rotation of the respective sun wheel (9, 10) takes place by an axial relative movement of the respective coupling tooth (5a) and of the respective coupling recess (9a, 10a) with the respective coupling tooth (5a) entering or emerging from, respectively, the respective coupling recess (9a, 10a), and in that both the coupling tooth (5a) and also the coupling recess (9a, 10a) of the coupling tooth-coupling recess combinations (5a, 9a; 5a, 10a) of each sun wheel (9, 10) comprises a pair of substantially axially parallel coupling flanks, and in that a member of the group: coupling tooth (5a) and coupling recess (9a) of a coupling tooth-coupling recess combination (5a, 9a) of a sun wheel (9) comprises at least one guide-in flank (9b) axially adjacent an associated coupling flank so that by relative rotation of the coupling tooth (5a) and of the coupling recess (9a) of the coupling tooth-coupling recess combination (5a, 9a) of said sun wheel (9) with peripheral juxtaposition of the guide-in flank (9b) of said member (9a) of the group: coupling tooth (5a) and coupling recess (9a) with respect to the respectively other member (5a) of said group an axial relative displacement of the coupling tooth (5a) and the coupling recess (9a) of the coupling tooth-coupling recess combination (5a, 9a) of said sun wheel (9) takes place in the direction of releasing the engagement of this coupling tooth (5a) and of this coupling recess (9a), and in that this axial relative displacement causes an axial consequential relative displacement of the coupling tooth (5a) and of the coupling recess (10a) of the coupling tooth-coupling recess combination (5a, 10a) of the other sun wheel (10) in the direction of establishing engagement of the coupling flanks of the coupling tooth (5a) and of the coupling recess (10a) of the coupling tooth-coupling recess combination (5a, 10a) of the other sun wheel (10).

## Revendications

1. Moyeu de changement de vitesses comportant plus de trois vitesses, en particulier cinq vitesses et - le cas échéant - un frein à rétropédalage, destiné à des bicyclettes ou similaires, comprenant
un axe de moyeu (5), qui possède un axe géométrique,
un entraîneur (3) monté tournant sur l'axe de moyeu (5), cet entraîneur (3) étant conçu pour être équipé d'au moins un pignon (3′),
un carter de moyeu (1) monté tournant sur l'axe de moyeu (5),
un engrenage planétaire à l'intérieur du carter de moyeu (1), cet engrenage planétaire présentant :
un porte-satellite (6) axialement fixe, monté tournant sur l'axe de moyeu (5),
au moins un satellite (8) axialement fixe, monté tournant sur le porte-satellite (6), ce satellite (8) étant pourvu d'un grand satellite étagé (8a) et d'un petit satellite étagé (8b),
des planétaires (9, 10), à savoir un petit planétaire (9) destiné à engrener avec le grand satellite étagé (8a) et un grand planétaire (10) destiné à engrener avec le petit satellite étagé (8b), ces planétaires (9, 10) étant susceptibles d'être bloqués de façon sélective contre une rotation autour de l'axe de moyeu (5),
une couronne (11) montée tournante autour de l'axe de moyeu (5)
la couronne (11) engrenant avec l'un des satellites étagés (8a, 8b),
et comprenant, en outre,
un élément d'accouplement (14) axialement mobile, se présentant, en particulier, sous la forme d'un coussinet d'accouplement (14), qui engrène de façon non-tournante et permanente avec l'entraîneur (3) et amène celui-ci, par coulissement axial, en accouplement sélectif avec soit le porte-satellite (6) soit la couronne (11), afin de tourner avec la partie concernée (6 ou 11) autour de l'axe de moyeu (5),
un premier dispositif d'encliquetage de roue libre (cliquet d'entraînement 19 - cliquet intérieur 1b) entre la couronne (11) et le carter de moyeu (1),
un deuxième dispositif d'encliquetage de roue libre (cliquet d'entraînement 18 - cliquet intérieur 1a) entre le porte-satellite (6) et le carter de moyeu (1) et
des moyens de changement de vitesse (tige de traction 12a - chaîne de traction 12b - élément de raccordement 12c), qui sont introduits à l'intérieur du moyeu par un perçage (5c) de l'axe de moyeu (5) et qui sont destinés et adaptés, à travers une fente (5b) de l'axe de moyeu (5), à empêcher, de façon sélective, la rotation autour de l'axe de moyeu (5) de l'un ou l'autre des planétaires (9, 10), afin d'accoupler de façon sélective l'entraîneur (3) avec le porte-satellite (6) et la couronne (11) et afin de désactiver le premier dispositif d'encliquetage de roue libre (19, 1b),
caractérisé en ce que chacun des planétaires (9, 10) est susceptible d'être bloqué contre une rotation autour de l'axe de moyeu (5), au moyen d'au moins une association entre une dent d'accouplement et un évidement d'accouplement (5a, 9a ; 5a, 10a) , comprenant une dent d'accouplement (5a) montée non tournante sur l'axe de moyeu (5) et un évidement d'accouplement (9a, 10a) situé sur le planétaire (9, 10) correspondant, en ce que le blocage et la libération de la rotation de chaque planétaire (9, 10) est rendue possible par un déplacement axial relatif de la dent d'accouplement (5a) concernée et de l'évidement d'accouplement (9a, 10a) concerné, dans la mesure où la dent d'accouplement (5a) concernée pénètre ou sort de l'évidement d'accouplement (9a, 10a) concerné, en ce que la dent d'accouplement (5a) et l'évidement d'accouplement (9a, 10a) de l'association dent d'accouplement-évidement d'accouplement (5a, 9a ; 5a, 10a) de chaque planétaire (9, 10) comprend respectivement une paire de flancs d'accouplement sensiblement parallèles à l'axe, en ce que l'un des éléments : dent d'accouplement (5a), évidement d'accouplement (9a) d'une association dent d'accouplement-évidement d'accouplement (5a, 9a) d'un planétaire (9) comprend au moins un flanc d'introduction (9b) disposé de façon axialement adjacente à un flanc d'accouplement associé, de telle sorte que, par une rotation relative de la dent d'accouplement (5a) et de l'évidement d'accouplement de l'association dent d'accouplement-évidement d'accouplement (5a, 9a) de l'un des planétaires (9), lorsque sont disposés, périphériquement en regard, le flanc d'introduction (9b) de l'un (9a) des éléments : dent d'accouplement (5a) et évidement d'accouplement (9a), et l'autre (5a) de ces éléments, on observe un déplacement axial relatif de la dent d'accouplement (5a) et de l'évidement d'accouplement (9a) de l'association dent d'accouplement-évidement d'accouplement (5a, 9a) de l'un des planétaires (9), dans le sens de la libération de cette dent d'accouplement (5a) et de cet évidement d'accouplement (9a), et en ce que ce déplacement axial relatif entraîne un déplacement relatif successif de la dent d'accouplement (5a) et de l'évidement d'accouplement (10a) de l'association dent d'accouplement-évidement d'accouplement (5a, 10a) de l'autre planétaire (10) dans le sens de l'engrènement des flancs d'accouplement de la dent d'accouplement (5a) et de l'évidement d'accouplement (10a) de l'association dent d'accouplement-évidement d'accouplement (5a, 10a) de l'autre planétaire (10).

2. Moyeu de changement de vitesses selon la revendication 1, caractérisé en ce que l'un des éléments : dent d'accouplement (5a), évidement d'accouplement (9a) d'une association dent d'accouplement-évidement d'accouplement (5a, 9a) d'un planétaire (9) comprend un flanc d'introduction (9b) axialement adjacent à la paire associée de flancs d'accouplement, et en ce que chaque flanc d'introduction (9b) de cette paire de flancs d'introduction (9b) est incliné dans le sens opposé à une ligne de référence parallèle à l'axe et passant par le centre périphérique de l'élément associé : dent d'accouplement (5a), évidement d'accouplement (9a).

3. Moyeu de changement de vitesses selon la revendication 1 ou 2, caractérisé en ce qu'une première liaison élastique (ressort 30) agit à l'encontre du déplacement axial relatif de la dent d'accouplement (5a) et de l'évidement d'accouplement (9a) de l'association dent d'accouplement-évidement d'accouplement (5a, 9a) de l'un des planétaires (9), et en ce que le déplacement axial relatif successif de la dent d'accouplement (5a) et de l'évidement d'accouplement (10a) de l'association dent d'accouplement-évidement d'accouplement (5a, 10a) de l'autre planétaire est provoqué par une deuxième liaison élastique (ressort 50).

4. Moyeu de changement de vitesses selon l'une des revendications 1 à 3, caractérisé en ce que l'association dent d'accouplement-évidement d'accouplement (5a, 9a) d'un premier (9) des planétaires (9, 10) et l'association dent d'accouplement-évidement d'accouplement (5a, 10a) d'un deuxième (10) des planétaires (9, 10) comprennent une dent d'accouplement (5a) commune à chacune des deux associations et respectivement un évidement (9a, 10a) dans chacun des deux planétaires (9, 10).

5. Moyeu de changement de vitesses selon l'une des revendications 1 à 3, caractérisé en ce que l'association dent d'accouplement-évidement d'accouplement (5a, 9a) d'un premier planétaire (9) comprend une première dent d'accouplement (5a) et un premier évidement d'accouplement (9a) pour le premier planétaire (9) et en ce que l'association dent d'accouplement-évidement d'accouplement (5a′, 10a′) d'un deuxième planétaire (10) comprend une deuxième dent d'accouplement (5a′) et un deuxième évidement d'accouplement (10a′) pour le deuxième planétaire (10).

6. Moyeu de changement de vitesses selon la revendication 4, caractérisé en ce que la dent d'accouplement commune (5a) est montée de façon axialement fixe par rapport à l'axe de moyeu (5), et en ce que les planétaires (9, 10) sont montés axialement mobiles par rapport à l'axe de moyeu (5).

7. Moyeu de changement de vitesses selon la revendication 4, caractérisé en ce que la dent d'accouplement commune (5a′) est montée axialement mobile par rapport à l'axe de moyeu (5), et en ce que les planétaires (9, 10) sont axialement fixes par rapport à l'axe de moyeu (5).

8. Moyeu de changement de vitesses selon l'une des revendications 1 à 7, caractérisé en ce que les flancs d'introduction (9b) font partie de l'évidement d'accouplement (9a) correspondant.

9. Moyeu de changement de vitesses selon l'une des revendications 1 à 7, caractérisé en ce que les flancs d'introduction (5b) font partie de la dent d'accouplement (5a) correspondante.

10. Moyeu de changement de vitesses selon l'une des revendications 1 à 9, caractérisé en ce que la dent d'accouplement (5a) d'au moins une des associations dent d'accouplement-évidement d'accouplement (5a, 9a) ne forme qu'une seule pièce avec l'axe de moyeu (5).

11. Moyeu de changement de vitesses selon l'une des revendications 1 à 5 et 7 à 9, caractérisé en ce que la dent d'accouplement (5a′) d'au moins une des associations dent d'accouplement-évidement d'accouplement (5a′, 9a) fait partie d'au moins un bloc de poussée.

12. Moyeu de changement de vitesses selon la revendication 7, caractérisé en ce que la dent d'accouplement (13a) d'au moins une des associations dent d'accouplement-évidement d'accouplement (13a, 9a ; 13a, 10a) est montée sur un manchon coulissant (13), qui est mobile axialement et est monté sans possibilité de torsion sur l'axe de moyeu (5).

13. Moyeu de changement de vitesses selon la revendication 5, caractérisé en ce qu'est prévue une liaison élastique de séparation (ressort de pression 51) entre les deux planétaires (9, 10), en ce que les deux planétaires (9, 10) sont axialement mobiles par rapport à l'axe de moyeu (5), et en ce que les dents d'accouplement (5a, 5a′) de l'association dent d'accouplement-évidement d'accouplement (5a, 9a ; 5a′, 10a) sont axialement fixes par rapport à l'axe de moyeu (5).

14. Moyeu de changement de vitesses selon l'une des revendications 1 à 13, caractérisé en ce que les moyens de changement de vitesses comprennent deux éléments de changement de vitesses (12b, 12b′) qui sont introduits, par les deux extrémités de l'axe de moyeu (5), dans des perçages correspondants de l'axe de moyeu (5), en ce qu'un premier (12b) de ces éléments de changement de vitesses est destiné et adapté à accoupler l'entraîneur (3), au choix, avec le porte-satellite (6) et la couronne (11) et à désactiver le premier dispositif d'encliquetage de roue libre (19, 1b), et en ce que le deuxième élément de changement de vitesses (12b′) est destiné et adapté à empêcher l'un ou l'autre des planétaires (9, 10), au choix, de tourner autour de l'axe de moyeu (5).

15. Moyeu de changement de vitesses selon l'une des revendications 1 à 14, caractérisé en ce que le carter du moyeu (1) possède une première portion axiale de grand diamètre et une deuxième portion axiale de petit diamètre, en ce que la première portion axiale loge l'engrenage planétaire et en ce que la deuxième portion axiale loge le frein à rétropédalage.

16. Moyeu de changement de vitesses selon l'une des revendications 1 à 15, caractérisé en ce que le frein à rétropédalage comprend un cône de freinage (17) et une bague de frein (24) susceptible d'être écartée, en ce que la bague de frein susceptible d'être écartée est fixée de façon non tournante sur l'axe de moyeu (5), en ce que le cône de freinage (17) est monté sur le porte-satellite (6) au moyen d'un filetage (6a) et est bloqué en rotation par un ressort de friction (20), une torsion vers l'arrière du porte-satellite (6), par l'intermédiaire du filetage (6a), provoquant un déplacement axial du cône de freinage (17) et ce déplacement axial du cône de freinage (17) entraînant un écartement de la bague de frein (24), afin qu'elle engrène avec le carter de moyeu (1) pour exercer une action de freinage.

17. Moyeu de changement de vitesses selon l'une des revendications 1 à 16, caractérisé en ce qu'il est conformé en moyeu de changement de vitesses à 5 vitesses, le petit planétaire (9), en 5e vitesse, étant libre de tourner autour de l'axe de moyeu (5), le grand planétaire (10) étant empêché de tourner autour de l'axe de moyeu (5), l'entraîneur (3) engrenant avec le porte-satellite pour transmettre le couple de rotation et le premier cliquet d'entraînement (19) de roue libre étant actif,
le petit planétaire (9), en 4e vitesse, étant empêché de tourner autour de l'axe de moyeu (5), le grand planétaire (10) étant libre de tourner autour de l'axe de moyeu (5), l'entraîneur (3) continuant à engrener avec le porte-satellite pour transmettre le couple de rotation et le premier cliquet d'entraînement (19) de roue libre étant encore actif,
le petit planétaire (9), en 3e vitesse, étant empêché de tourner autour de l'axe de moyeu (5), le grand planétaire (10) étant libre de tourner autour de l'axe de moyeu (5), l'entraîneur (3) engrenant avec la couronne (11) pour transmettre le couple de rotation et le premier cliquet d'entraînement (19) de roue libre étant encore actif,
le petit planétaire (9), en 2e vitesse, étant empêché de tourner autour de l'axe de moyeu (5), le grand planétaire (10) étant libre de tourner autour de l'axe de moyeu (5), l'entraîneur (3) engrenant avec la couronne (11) pour transmettre le couple de rotation et le premier cliquet d'entraînement (19) de roue libre étant désactivé, et
le petit planétaire (9), en 1e vitesse, étant libre de tourner autour de l'axe de moyeu (5), le grand planétaire (10) étant empêché de tourner autour de l'axe de moyeu (5), l'entraîneur (3) engrenant avec la couronne (11) pour transmettre le couple de rotation et le premier cliquet d'entraînement (19) de roue libre étant désactivé.

18. Moyeu de changement de vitesses selon la revendication 17, caractérisé en ce que les deux planétaires (9 et 10) sont précontraints par un ressort (30) contre un bloc de poussée relié à un organe de changement de vitesses (12b′) associé, dans une position dans laquelle l'un (9) des planétaires (9 et 10) engrène avec un élément d'accouplement (5a) fixé sur l'axe de moyeu, et en ce que, lorsqu'il y a déplacement de ce bloc de poussée, le ressort (30) désengrène l'un des planétaires (9) et engrène l'autre planétaire (10) avec l'élément d'accouplement (5a) fixé sur l'axe de moyeu.

19. Moyeu de changement de vitesses selon la revendication 18, caractérisé en ce que des moyens de butée (53) sont prévus entre les deux planétaires (9, 10).

20. Moyeu de changement de vitesses selon l'une des revendications 18 et 19, caractérisé en ce que le premier planétaire (9) est disposé à distance de l'entraîneur et le grand planétaire (10) est disposé à proximité de celui-ci, en ce que les deux planétaires (9, 10) sont précontraints par le ressort (30) dans le sens d'un engrènement du petit planétaire (9) avec l'élément d'accouplement (5a) fixé à l'axe de moyeu, en ce que l'un des organes de changement de vitesses (12b′) associé aux planétaires est introduit dans l'axe de moyeu (5) par l'extrémité de celui-ci qui est éloignée de l'entraîneur, et en ce que, par une traction exercée sur cet organe de changement de vitesses (12b′), les planétaires (9, 10) sont susceptibles d'être déplacés ensemble, à l'encontre de l'action du ressort (30), dans des positions dans lesquelles le grand planétaire (10) engrène avec l'élément d'accouplement (5a) fixé à l'axe et le petit planétaire (9) n'engrène pas avec cet élément d'accouplement (5a).

21. Moyeu de changement de vitesses selon l'une des revendications 17 à 20, caractérisé en ce qu'un organe de changement de vitesses (12b) associé à l'élément d'accouplement situé du côté de l'entraîneur (coussinet d'accouplement 14) est introduit dans l'axe de moyeu (5) par l'extrémité d'axe située du côté de l'entraîneur, en ce que l'élément d'accouplement (coussinet d'accouplement 14) est précontraint par une suspension (ressort de pression 28) dans le sens de l'engrènement avec le porte-satellite, en ce que l'entraîneur (3), par traction de l'organe de changement de vitesses (12b) associé, peut être dégagé de l'engrènement avec le porte-satellite et amené à engrener avec la couronne (11), et en ce que, si l'on continue à exercer une traction sur cet organe d'accouplement (12b), le premier cliquet de roue libre (19) est susceptible d'être désactivé.

22. Dispositif d'immobilisation de planétaire dans un moyeu de changement de vitesses comportant plus de trois vitesses, et - le cas échéant - un frein à rétropédalage, destiné à des bicyclettes ou similaires, en particulier dans un moyeu de changement de vitesses à 5 vitesses selon l'une des revendications 1 à 21, moyeu de changement de vitesses dans lequel un engrenage planétaire, à l'intérieur d'un carter de moyeu (1) présente :
un porte-satellite (6) axialement fixe, monté tournant sur un axe de moyeu (5),
au moins un satellite (8) axialement fixe, monté tournant sur le porte-satellite (6), ce satellite (8) étant pourvu d'un grand satellite étagé (8a) et d'un petit satellite étagé (8b),
des planétaires (9, 10), à savoir un petit planétaire (9) destiné à engrener avec le grand satellite étagé (8a) et un grand planétaire (10) destiné à engrener avec le petit satellite étagé (8b),
des moyens de changement de vitesse, qui sont introduits à l'intérieur du moyeu par un perçage (5c) de l'axe de moyeu (5) et qui sont destinés et adaptés, à travers une fente (5b) de l'axe de moyeu (5), à empêcher, de façon sélective, la rotation autour de l'axe de moyeu (5) de l'un ou l'autre des planétaires (9, 10),
et une couronne (11) montée tournante autour de l'axe de moyeu (5) et engrenant avec le satellite (8),
caractérisé en ce que
chacun des planétaires (9, 10) est susceptible d'être bloqué contre une rotation autour de l'axe de moyeu (5), au moyen d'au moins une association entre une dent d'accouplement et un évidement d'accouplement (5a, 9a ; 5a, 10a), comprenant une dent d'accouplement (5a) montée non tournante sur l'axe de moyeu (5) et un évidement d'accouplement (9a, 10a) situé sur le planétaire (9, 10) correspondant, en ce que le blocage et la libération de la rotation de chaque planétaire (9, 10) est rendue possible par un déplacement axial relatif de la dent d'accouplement (5a) concernée et de l'évidement d'accouplement (9a, 10a) concerné, dans la mesure où la dent d'accouplement (5a) concernée pénètre ou sort de l'évidement d'accouplement (9a, 10a) concerné, en ce que la dent d'accouplement (5a) et l'évidement d'accouplement (9a, 10a) des associations dent d'accouplement-évidement d'accouplement (5a, 9a ; 5a, 10a) de chacun des planétaires (9, 10) comprend respectivement une paire de flancs d'accouplement sensiblement parallèles à l'axe, en ce que l'un des éléments : dent d'accouplement (5a), évidement d'accouplement (9a) d'une association dent d'accouplement-évidement d'accouplement (5a, 9a) d'un planétaire (9) comprend au moins un flanc d'introduction (9b) disposé de façon axialement adjacente à un flanc d'accouplement associé, de telle sorte que, par une rotation relative de la dent d'accouplement (5a) et de l'évidement d'accouplement (9a) de l'association dent d'accouplement-évidement d'accouplement (5a, 9a) de l'un des planétaires (9), lorsque sont disposés, périphériquement en regard, le flanc d'introduction (9b) de l'un (9a) des éléments : dent d'accouplement (5a) et évidement d'accouplement (9a), et l'autre (5a) de ces éléments, on observe un déplacement axial relatif de la dent d'accouplement (5a) et de l'évidement d'accouplement (9a) de l'association dent d'accouplement-évidement d'accouplement (5a, 9a) de l'un des planétaires (9), dans le sens de la libération de cette dent d'accouplement (5a) et de cet évidement d'accouplement (9a), et en ce que ce déplacement axial relatif entraîne un déplacement axial relatif successif de la dent d'accouplement (5a) et de l'évidement d'accouplement (10a) de l'association dent d'accouplement-évidement d'accouplement (5a, 10a) de l'autre planétaire (10) dans le sens de l'engrènement des flancs d'accouplement de la dent d'accouplement (5a) et de l'évidement d'accouplement (10a) de l'association dent d'accouplement-évidement d'accouplement (5a, 10a) de l'autre planétaire (10).
